# EUROPÄISCHE PATENTSCHRIFT

(11) **EP 3 669 101 B1**
(45) Veröffentlichungstag und Bekanntmachung des Hinweises auf die Patenterteilung: **20.10.2021**
(21) Anmeldenummer: 18738213.0
(22) Anmeldetag: 25.06.2018
(51) Int. Cl.: F16H 37/04, F16H 3/12, F16H 3/78

(54) **GRUPPENGETRIEBEVORRICHTUNG**
RANGE-CHANGE TRANSMISSION DEVICE
DISPOSITIF DE TRAIN D'ENGRENAGES

(30) Priorität: 16.08.2017 DE 102017007763
(43) Veröffentlichungstag der Anmeldung: 24.06.2020
(73) Patentinhaber: Daimler AG, 70372 Stuttgart (DE)
(72) Erfinder: STEFFENS, Frank, 73760 Ostfildern (DE); SCHNITZER, Detlef, 73770 Denkendorf (DE); PFANNKUCHEN, Ingo, 88046 Friedrichshafen (DE); LUCKMANN, Jens, 71364 Winnenden (DE)
(74) Vertreter: JENSEN & SON
(86) Internationale Anmeldenummer: PCT/EP2018/066879
(87) Internationale Veröffentlichungsnummer: WO 2019/034310

(56) Entgegenhaltungen:
- EP-A1- 2 899 428
- DE-A1-102012 218 367
- DE-A1-102013 202 045

## Beschreibung

Die Erfindung betrifft eine Gruppengetriebevorrichtung, insbesondere ein lastschaltbares Getriebe, besonders bevorzugt ein Lastschaltklauengetriebe.

Es sind bereits Gruppengetriebevorrichtungen, insbesondere Powersplitgetriebe, für Nutzfahrzeuge mit einer Nachschaltgruppe in Klauenbauweise bekannt. Durch eine Vorschaltgruppe und kombinierte Gangräder ist eine Schaltung innerhalb der durch die Gangräder realisierten Gänge lastunterbrechungsfrei möglich. Analog zu doppelgekuppelten Getrieben ist eine Schaltung über eine Ganggruppe hinaus nicht ohne größeren Aufwand möglich.

Derartige Gruppengetriebevorrichtungen sind grundsätzlich aus der DE 10 2012 218 367 A1 und der DE 10 2013 202 045 A1 bekannt.

Aus der WO 2007/031193 A1 ist eine Gruppengetriebevorrichtung mit einer Eingangswelle, mit einer Zwischenwelle, mit einer Vorgelegewelle, mit einer Getriebeabtriebswelle und mit einem Planetenradsatz bekannt, wobei ein erstes Getriebeelement des Planetenradsatzes permanent drehfest mit der Zwischenwelle gekoppelt ist, wobei ein zweites Getriebeelement des Planetenradsatzes permanent drehfest mit der Getriebeabtriebswelle gekoppelt ist und wobei ein drittes Getriebeelement des Planetenradsatzes gehäusefest anordenbar oder mit der Getriebeabtriebswelle koppelbar ist.

Aus der EP 2 899 428 A1 und der gattungsgemäßen WO 2016053167 A1 sind solche Gruppengetriebevorrichtungen bekannt, die darüber hinaus einen zweiten Planetenradsatz aufweisen, von welchem ein Element mit der Vorgelegewelle koppelbar ist.

Der Erfindung liegt insbesondere die Aufgabe zugrunde, eine Gruppengetriebevorrichtung mit einer verbesserten Lastschaltbarkeit bereitzustellen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht von einer Gruppengetriebevorrichtung nach dem Oberbegriff des Anspruchs 1 aus.

Mit dem Begriff "gekoppelt" ist gemeint, dass ein Element der Gruppengetriebevorrichtung, wie zum Beispiel eine Welle oder ein Zahnrad, mit einem anderen Element drehmomentübertragend mittelbar oder unmittelbar verbunden ist. Mit dem Begriff "drehfest" bzw. mit dem Begriff einer "drehfesten Kopplung des einen und des anderen Elementes" ist gemeint, dass das eine Element und das andere Element koaxial zueinander angeordnet und derart fest miteinander verbunden sind, dass das eine Element und das andere Element während des Zustands der drehfesten Kopplung mit der gleichen Winkelgeschwindigkeit drehen.

Eine Kopplung kann aber auch durch einen oder mehrere Verzahnungseingriffe bzw. durch eine Übersetzungsstufe dargestellt sein. Der Begriff "gekoppelt" beschreibt somit allgemein eine Verbindung, über welche ein Drehmoment übertragen werden kann.

Der Begriff "permanent drehfest gekoppelt" ist dagegen eingeschränkt auf eine permanent drehfeste Verbindung zwischen zwei Elementen.

Die Eingangswelle ist dabei zur mittelbaren oder unmittelbaren Anbindung an einen Verbrennungsmotor vorgesehen. Die Getriebeabtriebswelle ist dabei zur mittelbaren oder unmittelbaren Anbindung an ein Antriebsrad eines Kraftfahrzeuges vorgesehen.

Die Erfindung ist dadurch gekennzeichnet, dass das erste Getriebeelement des zweiten Planetenradsatzes derart mit der Vorgelegewelle gekoppelt oder koppelbar ist, dass an dem ersten Getriebeelement des zweiten Planetenradsatzes ein Drehmoment aus dem zweiten Planetenradsatz zu der Vorgelegewelle ausgeleitet werden kann, und dass die Vorgelegewelle derart mit dem dritten Getriebeelement des ersten Planetenradsatzes gekoppelt oder koppelbar ist, dass ausgehend von der Vorgelegewelle ein Drehmoment an dem dritten Getriebeelement des ersten Planetenradsatzes in den ersten Planetenradsatz eingeleitet werden kann. Hierdurch kann vorteilhaft eine lastunterbrechungsfreie Schaltung zwischen Gängen unterschiedlicher Ganggruppen ermöglicht werden. Um diese Kopplung zu ermöglichen, weist die Gruppengetriebevorrichtung vorteilhafter Weise zumindest eine weitere Schalteinheit auf.

Die Anordnung ist derart, dass ein Drehmoment an dem ersten Getriebeelement des zweiten Planetenradsatzes aus dem zweiten Planetenradsatz ausgeleitet werden kann und von dort über die Vorgelegewelle an dem dritten Getriebeelement des ersten Planetenradsatzes in den ersten Planetensatz eingeleitet werden kann, ist wesentlich für die Erfindung. Es ist außerdem wesentlich, dass das genannte erste Getriebeelement des zweiten Planetenradsatzes dasjenige Element ist, welches nicht mit der Zwischenwelle drehfest gekoppelt oder koppelbar ist und welches auch nicht drehfest mit der Eingangswelle gekoppelt oder koppelbar ist. Dagegen ist es nicht erfindungswesentlich, ob das genannte erste Getriebeelement des zweiten Planetenradsatzes ein Sonnenrad oder ein Hohlrad oder ein Planetenträger ist. Dem Fachmann ist bekannt, dass bei einem Planetengetriebe die Anbindung der Elemente Sonnenrad, Hohlrad, Planetenträger zur Erzeugung von kinematisch äquivalenten Gesamtsystemen getauscht werden können.

Weiterhin ist es wesentlich für die Erfindung, dass ein Moment ausgehend von der Vorgelegewelle an demjenigen Element des ersten Planetenradsatzes in den ersten Planetenradsatz eingeleitet werden kann, welches nicht drehfest mit der Zwischenwelle gekoppelt oder koppelbar ist und welches auch nicht drehfest mit der Abtriebswelle des ersten Planetenradsatzes gekoppelt oder koppelbar ist. Auch hier ist es zunächst nicht wesentlich, ob das dritte Getriebeelement des ersten Planetenradsatzes als ein Hohlrad oder als ein Planetenträger oder als ein Sonnenrad ausgebildet ist.

Durch die erfindungsgemäße Vorrichtung ist vorteilhaft die lastunterbrechungsfreie Schaltung zwischen Gängen unterschiedlicher Ganggruppen möglich.

Besonders vorteilhaft ist dabei das erste Getriebeelement des zweiten Planetenradsatzes über genau eine erste Übersetzungsstufe mit der Vorgelegewelle gekoppelt oder koppelbar, und die Vorgelegewelle ist über genau eine zweite Übersetzungsstufe mit dem dritten Getriebeelement des ersten Planetenradsatzes gekoppelt oder koppelbar. Auf diese Weise kann die lastunterbrechungsfreie Schaltbarkeit zwischen Gängen unterschiedlicher Ganggruppen besonders einfach und damit robust, kostengünstig und reibungsarm dargestellt werden.

Durch die erfindungsgemäße Ausgestaltung der Gruppengetriebevorrichtung kann insbesondere eine vorteilhaft gute Lastschaltbarkeit bereitgestellt werden. Vorzugsweise kann mittels der Erfindung ein durchgängig lastschaltbares Klauengetriebe innerhalb einer Ganggruppe und/oder bevorzugt zwischen verschiedenen Ganggruppen realisiert werden. Besonders bevorzugt kann eine lastunterbrechungsfreie Schaltung zwischen einem niedrigsten Gang einer ersten Ganggruppe, insbesondere Range high, und einem höchsten Gang einer zweiten Ganggruppe, insbesondere Range low, erreicht werden.

Es kann bevorzugt ein zusätzlicher verschleißfreier Anfahrgang erzeugt werden. Ferner kann vorteilhaft eine schnelle Schaltung über eine Nachschaltgruppe ohne Synchronisierungen und/oder Lamellenkupplungen realisiert werden. Ferner kann vorteilhaft ein modulares Getriebe, insbesondere durch geschickte Kombination mehrerer Nachschaltgruppen, aufgebaut werden. Es kann besonders vorteilhaft eine kompakte Bauweise erreicht werden. Bevorzugt kann eine Optimierung eines Verbrennungsmotors und/oder besonders bevorzugt eine Kombination eines Verbrennungsmotors mit einer elektrischen Maschine, insbesondere als Hybridgetriebe, ermöglicht werden. Ferner ist besonders bevorzugt elektrisches Fahren möglich. Des Weiteren kann vorteilhaft eine Schleppleistung reduziert und/oder effizientes Downspeeding erreicht werden.

Unter einer "Gruppengetriebevorrichtung" soll insbesondere zumindest ein Teil eines Gruppengetriebes verstanden werden. Alternativ kann die Gruppengetriebevorrichtung das Gruppengetriebe vollständig ausbilden. Die Gruppengetriebevorrichtung weist insbesondere ein Hauptgetriebe, vorzugsweise eine Hauptgruppe, auf, welche bevorzugt eine Zwischenwelle umfasst. Es wäre jedoch auch denkbar, dass die Hauptgruppe frei von einer Zwischenwelle ist. Die Hauptgruppe kann insbesondere eine Mehrzahl von Gängen umfassen. Vorzugsweise ist die Hauptgruppe zu einer Schaltung einer Mehrzahl von Gängen vorgesehen. Vorteilhaft weist die Gruppengetriebevorrichtung zumindest ein Reduziergetriebe, besonders vorteilhaft zumindest zwei Reduziergetriebe und besonders bevorzugt eine Rangegruppe und eine Vorschaltgruppe auf. Vorzugsweise ist die Gruppengetriebevorrichtung, insbesondere für LKWs, insbesondere bei einer Ausbildung als Powersplit-Gruppengetriebevorrichtung zu einer Aufteilung eines Antriebsmoments auf eine Hauptwelle und auf zumindest eine Vorgelegewelle vorgesehen, wobei die Vorgelegewelle insbesondere an einem Ende wieder mit der Hauptwelle gekoppelt ist. Bevorzugt weist einer der Pfade schaltbare Zahnräder auf, wobei der Pfad mit den schaltbaren Zahnrädern insbesondere Mittel zur Verringerung oder Erhöhung des Drehmoments dieses Weges aufweist. Vorzugsweise kann über die Mittel zumindest ein schaltbares Zahnrad und/oder dessen Pfad frei von Drehmoment gemacht werden, während der andere Weg immer noch Drehmoment überträgt. Hierdurch kann insbesondere eine Gangschaltung ohne Drehmomentunterbrechung ermöglicht werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Planetenradsatz" soll insbesondere eine Einheit eines Planetengetriebes mit einem als Sonnenrad ausgebildeten Getriebeelement, mit einem als Hohlrad ausgebildeten Getriebeelement, mit einem als Planetenradträger ausgebildeten Getriebeelement und mit mehreren als Planetenräder ausgebildeten Getriebeelementen verstanden werden, wobei die als Planetenräder ausgebildeten Getriebeelemente von dem als Planetenradträger ausgebildeten Getriebeelement auf einer Kreisbahn um das als Sonnenrad ausgebildete Getriebeelement angeordnet sind. Unter einem "Planetengetriebe" soll insbesondere eine Einheit mit zumindest einem Planetenradsatz, bevorzugt mit genau einem Planetenradsatz, verstanden werden. Alternativ oder zusätzlich kann das Planetengetriebe mehrstufig ausgebildet sein und vorzugsweise mehrere Planetenradsätze umfassen.

Insbesondere soll unter einer "Schalteinheit" eine Einheit mit zumindest zwei Kopplungselementen und zumindest einem Schaltelement verstanden werden, welches dazu vorgesehen ist, eine schaltbare Verbindung zwischen den zumindest zwei Kopplungselementen herzustellen. Vorzugsweise ist die Schalteinheit von einer Schalteinheit mit drei Kopplungselementen gebildet. Unter einem "Schaltelement" einer Schalteinheit soll insbesondere ein Element verstanden werden, das vorzugsweise axial verschiebbar ausgebildet ist und in zumindest einem Betriebszustand, insbesondere in zumindest einer Schaltstellung der Schalteinheit, zu einer drehfesten Kopplung der zumindest zwei Kopplungselemente vorgesehen ist. Unter einem "Kopplungselement" soll insbesondere ein permanent drehfest mit einem Getriebeelement, wie beispielsweise einer Getriebewelle, einem Losrad, einem Festrad und/oder einer Achse, verbundenes Element der Schalteinheit verstanden werden, welches vorzugsweise axial und radial fixiert ist und welches insbesondere für eine reib-, kraft- und/oder formschlüssige Verbindung mit dem Schaltelement vorgesehen ist, wie beispielsweise ein Losrad, das eine Verzahnung zur Verbindung mit dem Schaltelement aufweist. Unter einer "Schalteinheit mit drei Kopplungselementen" soll insbesondere eine Schalteinheit verstanden werden, bei der das Schaltelement dazu vorgesehen ist, ein Kopplungselement, insbesondere ein inneres Kopplungselement, schaltbar mit jeweils zumindest einem der beiden anderen Kopplungselemente zu verbinden oder von diesen zu entkoppeln.

Ferner wird vorgeschlagen, dass die Gruppengetriebevorrichtung eine Bremseinheit aufweist, welche dazu vorgesehen ist, das erste Getriebeelement des zweiten Planetenradsatzes gehäusefest anzuordnen. Die Bremseinheit kann beispielsweise von einer gehäusefesten Verzahnung gebildet sein. Grundsätzlich sind jedoch auch andere, einem Fachmann als sinnvoll erscheinende Ausbildungen der Bremseinheit denkbar. Dadurch kann eine vorteilhafte Schaltbarkeit der Gruppengetriebevorrichtung erreicht werden.

Gemäß einer weiteren Weiterbildung weist die Gruppengetriebevorrichtung eine Momentenanpassungseinheit auf, welche mit dem ersten Getriebeelement des zweiten Planetenradsatzes gekoppelt oder derart koppelbar ist, dass ein Drehmoment ausgehend von der Momentenanpassungseinheit an dem ersten Getriebeelement des zweiten Planetenradsatzes in den zweiten Planetenradsatz eingeleitet werden kann. Auf diese Weise kann eine Drehzahl des ersten Getriebeelementes des zweiten Planetenradsatzes mittels der Momentenanpassungsvorrichtung beeinflusst werden und somit lastunterbrechungsfreie Gangwechsel durchgeführt werden. Wesentlich ist bei dieser Weiterbildung, dass die Momentenanpassungseinheit ein Drehmoment an demjenigen Getriebeelement in den zweiten Planetenradsatz einleiten kann, welches nicht drehfest mit der Eingangswelle oder drehfest mit der Zwischenwelle gekoppelt oder koppelbar ist.

Gemäß einer weiteren Weiterbildung ist die Momentenanpassungseinheit über eine Schalteinheit und besonders bevorzugt zusätzlich über ein Losrad der Zwischenwelle mit der Vorgelegewelle koppelbar.

Unter der "Momentenanpassungseinheit" soll insbesondere eine Einheit verstanden werden, welche in zumindest einem Betriebszustand zu einer Veränderung eines übertragenen Moments vorgesehen ist. Vorzugsweise kann die Momentenanpassungseinheit zu einer Verringerung und/oder zu einer Erhöhung eines übertragenen Moments vorgesehen sein. Bevorzugt ist die Momentenanpassungseinheit insbesondere in einem Anfahrvorgang und/oder bei einem Schaltvorgang zu einer Veränderung, insbesondere zu einer stufenlosen Veränderung, eines Übersetzungsverhältnisses der Gruppengetriebevorrichtung vorgesehen. Vorzugsweise ist die Momentenanpassungseinheit in zumindest einem Betriebszustand dazu vorgesehen, ein übertragenes Moment zu verringern und/oder zu erhöhen, vorteilhaft um zumindest ein schaltbares Zahnrad frei von einem Drehmoment zu bekommen.

Besonders bevorzugt weist die Momentenanpassungseinheit eine elektrischen Maschine oder eine Hydraulikpumpe oder einen Retarder oder eine Reibbremse oder eine Kombination aus diesen auf. Bei einer Ausbildung der Momentenanpassungseinheit als elektrische Maschine kann die elektrische Maschine zum Zwecke einer Bremseinwirkung als Generator betrieben werden. Dadurch kann vorteilhaft ein durchgängig lastschaltbares Klauengetriebe ermöglicht werden.

Zudem wird vorgeschlagen, dass die Gruppengetriebevorrichtung eine zweite Schalteinheit aufweist, welche dazu vorgesehen ist, in zumindest einer Schaltstellung, insbesondere einer ersten Schaltstellung der zweiten Schalteinheit, das erste Getriebeelement des zweiten Planetenradsatzes mit der Vorgelegewelle derart zu koppeln, dass ein Drehmoment ausgehend von dem zweiten Planetenradsatz an dem ersten Getriebeelement des zweiten Planetenradsatzes ausgeleitet und auf die Vorgelegewelle übertragen werden kann. Hierdurch kann vorteilhaft eine schaltbare Powersplitfunktion realisiert werden. Ferner kann eine vorteilhaft gute Lastschaltbarkeit bereitgestellt werden.

Darüber hinaus wird vorgeschlagen, dass die zweite Schalteinheit dazu vorgesehen ist, in zumindest einer weiteren Schaltstellung, insbesondere einer zweiten Schaltstellung der zweiten Schalteinheit, den zweiten Planetenradsatz zu verblocken. Die zweite Schalteinheit kann hierzu zweiteilig ausgeführt sein, wobei ein erster Teil zur Kopplung des ersten Getriebeelements des zweiten Planetenradsatzes mit der Vorgelegewelle ausgebildet ist und ein zweiter Teil zur Verblockung des zweiten Planetenradsatzes ausgebildet ist.

Besonders vorteilhaft ist dabei die zweite Schalteinheit als Doppelschalteinheit ausgebildet, wobei der erste Teil und der zweite Teil benachbart angeordnet sind.

Insbesondere ist die zweite Schalteinheit dazu vorgesehen, in der zweiten Schaltstellung der zweiten Schalteinheit, das erste Getriebeelement des zweiten Planetenradsatzes drehfest mit einem zweiten Getriebeelement des zweiten Planetenradsatzes zu koppeln. Hierdurch kann vorteilhaft ein Direktgang bereitgestellt werden.

Darüber hinaus wird vorgeschlagen, dass die Gruppengetriebevorrichtung eine dritte Schalteinheit aufweist, welche dazu vorgesehen ist, die Vorgelegewelle mit dem dritten Getriebeelement des ersten Planetenradsatzes derart zu koppeln, dass ein Drehmoment ausgehend von der Vorgelegewelle an dem dritten Getriebeelement des ersten Planetenradsatzes in den dritten Planetenradsatz eingeleitet werden kann. Die dritte Schalteinheit kann hierzu koaxial zu der Vorgelegewelle oder auch koaxial zu dem ersten Planetenradsatz angeordnet sein.

Als besonders vorteilhaft wird vorgeschlagen, dass die dritte Schalteinheit ein erstes Schaltzahnrad aufweist, welches permanent drehfest und axial verschiebbar auf der Vorgelegewelle angeordnet ist. Zudem wird vorgeschlagen, dass das dritte Getriebeelement des ersten Planetenradsatzes permanent drehfest mit einem zweiten Schaltzahnrad gekoppelt ist, mit welchem das erste Schaltzahnrad in Eingriff bringbar ist. Dadurch kann vorteilhaft eine gute Lastschaltbarkeit realisiert werden. Ferner kann vorteilhaft eine schnelle Schaltung über eine Nachschaltgruppe ohne Synchronisierungen und/oder Lamellenkupplungen realisiert werden.

Ferner wird vorgeschlagen, dass die zweite Schalteinheit in einer Momentenstromrichtung betrachtet axial vor dem zweiten Planetenradsatz angeordnet ist. Insbesondere ist die zweite Schalteinheit in Momentenstromrichtung betrachtet axial hinter einer zweiten Zahnradebene angeordnet. Unter einer "Momentenstromrichtung" soll insbesondere eine Richtung einer Übertragung eines Drehmoments durch die Gruppengetriebevorrichtung verstanden werden. Vorteilhaft verläuft die Momentenstromrichtung axial von einer Getriebeeingangsseite hin zu einer Getriebeausgangsseite.

Zudem wird vorgeschlagen, dass die Bremseinheit in Momentenstromrichtung betrachtet axial vor der zweiten Schalteinheit angeordnet ist. Die Bremseinheit ist vorteilhaft in Momentenstromrichtung betrachtet axial hinter einer Kupplung, insbesondere Lastschaltkupplung, angeordnet. Ferner ist die Bremseinheit vorteilhaft in Momentenstromrichtung betrachtet axial vor einer ersten Zahnradebene angeordnet.

Des Weiteren wird vorgeschlagen, dass die erste Schalteinheit in Momentenstromrichtung betrachtet axial zwischen dem ersten Planetenradsatz und dem zweiten Planetenradsatz angeordnet ist. Insbesondere ist die erste Schalteinheit in Momentenstromrichtung betrachtet axial vor einer sechsten Zahnradebene und/oder hinter einer fünften Zahnradebene angeordnet. Hierdurch kann insbesondere eine vorteilhafte Gruppengetriebevorrichtung bereitgestellt werden. Es kann vorteilhaft eine kompakte Bauweise erreicht werden.

Darüber hinaus wird vorgeschlagen, dass die erste Schalteinheit dazu vorgesehen ist, in zumindest einer weiteren Schaltstellung, insbesondere einer ersten Schaltstellung der ersten Schalteinheit, den ersten Planetenradsatz zu verblocken. Die erste Schalteinheit kann hierzu zweiteilig ausgeführt sein, wobei ein erster Teil zur gehäusefesten Anordnung des dritten Getriebeelements des ersten Planetenradsatzes ausgebildet ist und ein zweiter Teil zur Verblockung des ersten Planetenradsatzes ausgebildet ist. Der erste Teil und der zweite Teil können dabei vorteilhaft benachbart angeordnet sein, so dass die erste Schalteinheit vorteilhaft als Doppelschaltelement ausgebildet ist.

Insbesondere ist die erste Schalteinheit dazu vorgesehen, in der ersten Schaltstellung der ersten Schalteinheit, das erste Getriebeelement des ersten Planetenradsatzes drehfest mit dem dritten Getriebeelement des ersten Planetenradsatzes zu koppeln.

In einer Weiterbildung der Erfindung ist die erste Schalteinheit von einer Schalteinheit mit drei Kopplungselementen und/oder mit drei Schaltstellungen gebildet.

Ferner wird vorgeschlagen, dass die Gruppengetriebevorrichtung eine vierte Schalteinheit aufweist, welche dazu vorgesehen ist, in zumindest einer Schaltstellung die Zwischenwelle mit der Vorgelegewelle über eine Zahnradpaarung zu koppeln.

Besonders vorteilhaft ist die vierte Schalteinheit koaxial zu der Zwischenwelle angeordnet und dazu ausgebildet, in zumindest einer Schaltstellung, insbesondere einer ersten Schaltstellung der vierten Schalteinheit, ein erstes Losrad der Zwischenwelle, welches permanent in Eingriff mit einem Festrad der Vorgelegewelle steht, drehfest mit der Zwischenwelle zu koppeln.

Zudem wird vorgeschlagen, dass die vierte Schalteinheit eine neutrale Schaltstellung und eine zweite Schaltstellung aufweist und dazu vorgesehen ist, in der zweiten Schaltstellung ein zweites Losrad der Zwischenwelle drehfest mit der Zwischenwelle zu koppeln. Dadurch können vorteilhaft mehrere Gangstufen realisiert werden.

Des Weiteren wird vorgeschlagen, dass das erste Getriebeelement des ersten Planetenradsatzes als ein Sonnenrad ausgebildet ist. Darüber hinaus wird vorgeschlagen, dass das zweite Getriebeelement des ersten Planetenradsatzes als ein Planetenradträger ausgebildet ist. Ferner wird vorgeschlagen, dass das dritte Getriebeelement des ersten Planetenradsatzes als ein Hohlrad ausgebildet ist. Zudem wird vorgeschlagen, dass das erste Getriebeelement des zweiten Planetenradsatzes als ein Sonnenrad ausgebildet ist. Des Weiteren wird vorgeschlagen, dass das dritte Getriebeelement des zweiten Planetenradsatzes als ein Hohlrad ausgebildet ist. Insbesondere ist das zweite Getriebeelement des zweiten Planetenradsatzes als ein Planetenradträger ausgebildet. Dadurch kann eine vorteilhafte Lastschaltbarkeit einer Gruppengetriebevorrichtung realisiert werden.

Schließlich wird ein Antriebsstrang mit einer als Verbrennungsmotor ausgebildeten Antriebseinheit und der erfindungsgemäßen Gruppengetriebevorrichtung vorgeschlagen, wobei eine Kurbelwelle des Verbrennungsmotors permanent drehfest mit der Eingangswelle der Gruppengetriebevorrichtung gekoppelt ist, die Momentenanpassungseinheit mit dem ersten Getriebeelement des zweiten Planetenradsatezs gekoppelt oder koppelbar ist und die Eingangswelle permanent drehfest mit dem zweiten Getriebeelement des zweiten Planetenradsatzes verbunden ist.

Vorteilhaft kann bei diesem vorgeschlagenen Antriebsstrang auf eine Anfahrkupplung verzichtet werden. Dies ist insgesamt deshalb möglich, weil Antriebsmoment ausgehend von dem Verbrennungsmotor über das zweite Getriebeelement des zweiten Planentenradsatzes in den zweiten Planetenradsatz in diesen eingeleitet werden kann, gleichzeitig ein Bremsmoment ausgehend von der Momentenanpassungseinheit über das erste Getriebeelement des zweiten Planetenradsatzes in den zweiten Planetenradsatz eingeleitet werden kann, so dass ein skalierbares Anfahrmoment über das dritte Getriebeelement des zweiten Planetenradsatzes aus dem zweiten Planetenradsatz ausgeleitet werden kann. Insgesamt wird somit ein Antriebsstrang dargestellt, der eine besonders performante Schaltbarkeit, gleichzeitig eine kostengünstig dargestellte Anfahrbarkeit und aufgrund eines reduzierten Gewichts einen hohen Wirkungsgrad aufweist.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein Kraftfahrzeug mit einer Brennkraftmaschine und mit einer Gruppengetriebevorrichtung in einer schematischen Darstellung,
- Fig. 2: die erfindungsgemäße Gruppengetriebevorrichtung des Kraftfahrzeugs in einer schematischen Darstellung in einem ersten Gang und
- Fig. 3: ein Schaltschema der erfindungsgemäßen Gruppengetriebevorrichtung.

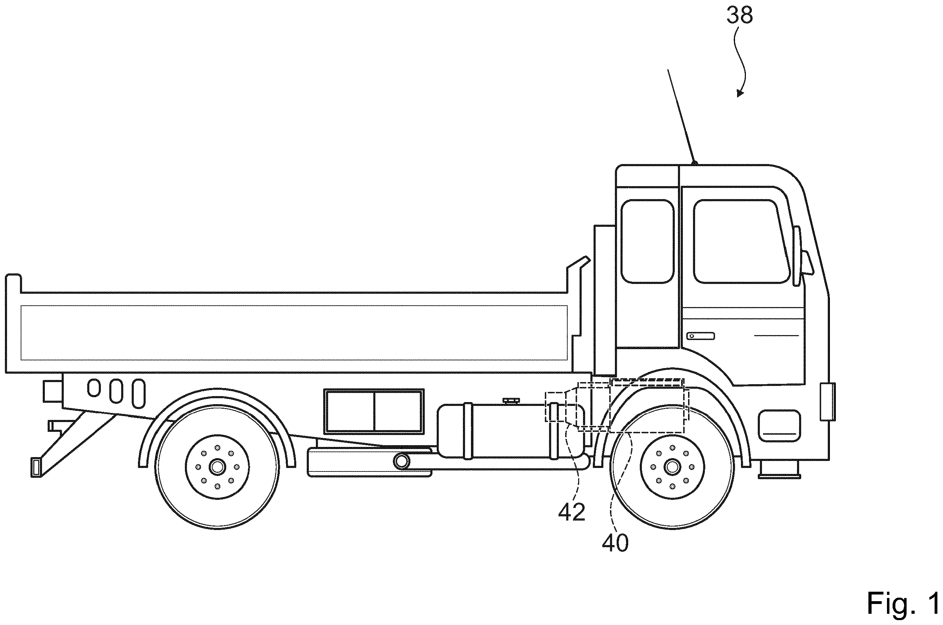

Die Figur 1 zeigt schematisch ein Kraftfahrzeug 38. Das Kraftfahrzeug 38 ist von einem Nutzfahrzeug gebildet. Das Kraftfahrzeug 38 ist beispielhaft von einem Lastkraftwagen gebildet. Grundsätzlich wäre jedoch auch eine andere, einem Fachmann als sinnvoll erscheinende Ausgestaltung eines Kraftfahrzeugs denkbar, beispielsweise als ein Omnibus, als eine Zugmaschine, als ein Kranwagen und/oder als ein Einsatzfahrzeug, insbesondere ein Feuerwehrfahrzeug.

Das Kraftfahrzeug 38 umfasst einen Antriebsstrang, über welchen nicht weiter sichtbar Antriebsräder des Kraftfahrzeugs 38 angetrieben werden. Der Antriebsstrang umfasst eine Antriebseinheit 40. Die Antriebseinheit 40 ist von einer Brennkraftmaschine gebildet. Die Antriebseinheit 40 ist von einem Verbrennungsmotor gebildet. Grundsätzlich wäre auch denkbar, dass eine Antriebseinheit als eine elektrische Maschine und/oder als eine Hybridantriebseinheit aus einem Verbrennungsmotor und einer elektrischen Maschine ausgebildet ist.

Ferner weist das Kraftfahrzeug 38 ein Mehrstufengetriebe 42 auf. Das Mehrstufengetriebe 42 ist von einem Kraftfahrzeuggetriebe gebildet. Das Mehrstufengetriebe 42 ist von einem Gruppengetriebe gebildet. Das Mehrstufengetriebe 42 bildet einen Teil des Antriebsstrangs des Kraftfahrzeugs 38. Das Mehrstufengetriebe 42 ist entlang des Antriebsstrangs, insbesondere entlang eines Kraftflusses des Antriebsstrangs, hinter der Antriebseinheit 40 angeordnet. Die Antriebseinheit 40 weist eine angetriebene Kurbelwelle auf, welche mit dem Mehrstufengetriebe 42 verbunden ist.

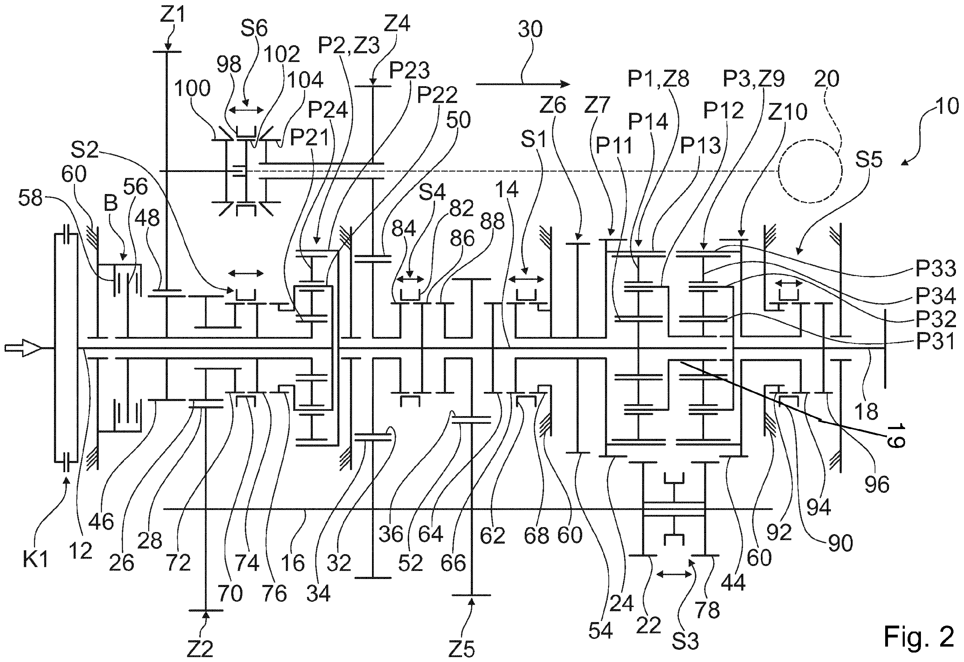

Die Figur 2 zeigt schematisch eine Gruppengetriebevorrichtung 10. Das Mehrstufengetriebe 42 weist die Gruppengetriebevorrichtung 10 auf. Das Mehrstufengetriebe 42 ist von der Gruppengetriebevorrichtung 10 gebildet. Die Gruppengetriebevorrichtung 10 ist als ein Powersplitgetriebe ausgebildet. Die Gruppengetriebevorrichtung 10 ist konstruktiv zur Schaltung von vierzehn Getriebegängen G1-G14 vorgesehen. Die Gruppengetriebevorrichtung 10 weist eine Nachschaltgruppe auf. Die Nachschaltgruppe ist als eine Rangegruppe ausgebildet. Die Rangegruppe ist dazu vorgesehen, zwischen zumindest zwei, im vorliegenden Fall zwischen drei, Ganggruppen umzuschalten. Die Gruppengetriebevorrichtung 10 weist eine Vorschaltgruppe auf.

Die Gruppengetriebevorrichtung 10 umfasst eine Eingangswelle 12. Die Eingangswelle 12 ist an einen zweiten Planetenradsatz P2 der Gruppengetriebevorrichtung 10 angebunden. Die Eingangswelle 12 ist zu einer Anbindung an eine Kupplung K1, insbesondere Lastschaltkupplung, vorgesehen. Die Eingangswelle 12 ist antriebsseitig zu einer Anbindung an eine Kupplung K1, insbesondere Lastschaltkupplung, vorgesehen. Die Gruppengetriebevorrichtung 10 ist über eine Kupplung K1, insbesondere Lastschaltkupplung, mit der Antriebseinheit 40 verbindbar. Die Gruppengetriebevorrichtung 10 weist eine Getriebeabtriebswelle 18 auf. Die Getriebeabtriebswelle 18 ist zu der Eingangswelle 12 koaxial angeordnet. Die Getriebeabtriebswelle 18 ist zu einer Anbindung an einen Planetenradsatz, insbesondere einen dritten Planetenradsatz P3, vorgesehen.

Die Gruppengetriebevorrichtung 10 weist eine Zwischenwelle 14 auf. Die Zwischenwelle 14 ist zu der Eingangswelle 12 koaxial angeordnet. Die Zwischenwelle 14 ist zu der Getriebeabtriebswelle 18 koaxial angeordnet. Die Zwischenwelle 14 ist axial zwischen der Eingangswelle 12 und der Getriebeabtriebswelle 18 angeordnet. Die Zwischenwelle 14 ist als Vollwelle ausgebildet. Die Zwischenwelle 14 ist an einen ersten Planetenradsatz P1 angebunden. Ferner ist die Zwischenwelle 14 an den zweiten Planetenradsatz P2 angebunden. Die Gruppengetriebevorrichtung 10 umfasst eine Vorgelegewelle 16. Die Vorgelegewelle 16 ist zu der Eingangswelle 12 parallel versetzt angeordnet. Die Vorgelegewelle 16 weist eine höhere axiale Erstreckung auf als die Zwischenwelle 14. Die Vorgelegewelle 16 ist als Vollwelle ausgebildet.

Die Gruppengetriebevorrichtung 10 umfasst zehn Zahnradebenen Z1-Z10.

Die Gruppengetriebevorrichtung 10 umfasst den ersten Planetenradsatz P1. Die Nachschaltgruppe weist den ersten Planetenradsatz P1 auf. Die Rangegruppe weist den ersten Planetenradsatz P1 auf. Der erste Planetenradsatz P1 ist als Einfach-Planetenradsatz ausgebildet. Der erste Planetenradsatz P1 ist in einer achten Zahnradebene Z8 der Zahnradebenen Z1-Z10 angeordnet. Der erste Planetenradsatz P1 bildet die achte Zahnradebene Z8 aus. Der erste Planetenradsatz P1 umfasst drei Getriebeelemente P11, P12, P13.

Der erste Planetenradsatz P1 umfasst ein erstes Getriebeelement P11. Das erste Getriebeelement P11 des ersten Planetenradsatzes P1 ist als ein Sonnenrad ausgebildet. Das erste Getriebeelement P11 des ersten Planetenradsatzes P1 ist mit der Zwischenwelle 14 permanent drehfest gekoppelt.

Der erste Planetenradsatz P1 umfasst ein zweites Getriebeelement P12. Das zweite Getriebeelement P12 des ersten Planetenradsatzes P1 ist als ein Planetenradträger ausgebildet. Das zweite Getriebeelement P12 des ersten Planetenradsatzes P1 ist mit der Getriebeabtriebswelle 18 gekoppelt. Das zweite Getriebeelement P12 des ersten Planetenradsatzes P1 ist mit der Getriebeabtriebswelle 18 über eine Übersetzung gekoppelt. Das zweite Getriebeelement P12 des ersten Planetenradsatzes P1 ist mit der Getriebeabtriebswelle 18 über den dritten Planetenradsatz P3 gekoppelt.

Das zweite Getriebeelement P12 des ersten Planetenradsatzes P1 ist drehfest mit einer Abtriebswelle 19 verbunden. Die Abtriebswelle 19 ist zugleich eine weitere Eingangswelle in den dritten Planetenradsatz P3. Der dritte Planetenradsatz P3 fungiert lediglich als eine weitere Übersetzungsstufe. Alternativ ist es auch gut möglich die Abtriebswelle 19 direkt drehfest mit der Getriebeabtriebswelle 18 zu verbinden und auf den dritten Planetenradsatz P3 zu verzichten.

Der erste Planetenradsatz P1 umfasst ein drittes Getriebeelement P13. Das dritte Getriebeelement P13 des ersten Planetenradsatzes P1 ist als ein Hohlrad ausgebildet.

Ferner umfasst der erste Planetenradsatz P1 Planetenräder P14, die auf dem als Planetenradträger ausgebildeten zweiten Getriebeelement P12 gelagert sind.

Die Gruppengetriebevorrichtung 10 umfasst den zweiten Planetenradsatz P2. Die Vorschaltgruppe weist den zweiten Planetenradsatz P2 auf. Der zweite Planetenradsatz P2 ist als Einfach-Planetenradsatz ausgebildet. Der zweite Planetenradsatz P2 ist als ein Eingangsplanetenradsatz ausgebildet. Der zweite Planetenradsatz P2 ist in einer dritten Zahnradebene Z3 der Zahnradebenen Z1-Z10 angeordnet. Der zweite Planetenradsatz P2 bildet die dritte Zahnradebene Z3 aus. Der zweite Planetenradsatz P2 umfasst drei Getriebeelemente P21, P22, P23.

Der zweite Planetenradsatz P2 umfasst ein erstes Getriebeelement P21. Das erste Getriebeelement P21 des zweiten Planetenradsatzes P2 ist als ein Sonnenrad ausgebildet.

Der zweite Planetenradsatz P2 umfasst ein zweites Getriebeelement P22. Das zweite Getriebeelement P22 des zweiten Planetenradsatzes P2 ist als ein Planetenradträger ausgebildet. Das zweite Getriebeelement P22 des zweiten Planetenradsatzes P2 ist permanent drehfest mit der Eingangswelle 12 gekoppelt.

Der zweite Planetenradsatz P2 umfasst ein drittes Getriebeelement P23. Das dritte Getriebeelement P23 des zweiten Planetenradsatzes P2 ist als ein Hohlrad ausgebildet. Das dritte Getriebeelement P23 des zweiten Planetenradsatzes P2 ist permanent drehfest mit der Zwischenwelle 14 gekoppelt.

Ferner umfasst der zweite Planetenradsatz P2 Planetenräder P24, die auf dem als Planetenradträger ausgebildeten zweiten Getriebeelement P22 gelagert sind.

Ein Kraftfluss der als Powersplitgetriebe ausgebildeten Gruppengetriebevorrichtung 10 wird an dem zweiten Getriebeelement P22 des zweiten Planetenradsatzes P2 aufgeteilt. Zumindest ein Teil des Kraftflusses verläuft über das dritte Getriebeelement P23 des zweiten Planetenradsatzes P2. Ferner verläuft der Teil des Kraftflusses über zumindest einen Teil der Zwischenwelle 14. Ein optionaler weiterer Teil des Kraftflusses verläuft über das erste Getriebeelement P13 des zweiten Planetenradsatzes P2. Ferner verläuft der weitere Teil des Kraftflusses optional über zumindest einen Teil der Vorgelegewelle 16.

Die Gruppengetriebevorrichtung 10 umfasst den dritten Planetenradsatz P3. Die Nachschaltgruppe weist den dritten Planetenradsatz P3 auf. Die Rangegruppe weist den dritten Planetenradsatz P3 auf. Der dritte Planetenradsatz P3 ist als Einfach-Planetenradsatz ausgebildet. Der dritte Planetenradsatz P3 ist in einer neunten Zahnradebene Z9 der Zahnradebenen Z1-Z10 angeordnet. Der dritte Planetenradsatz P3 bildet die neunte Zahnradebene Z9 aus. Der dritte Planetenradsatz P3 umfasst drei Getriebeelemente P31, P32, P33. Grundsätzlich wäre jedoch auch denkbar, dass zumindest ein Planetenradsatz, insbesondere ein erster, ein zweiter und/oder ein dritter Planetenradsatz, beispielsweise von einem Doppel-Planetenradsatz gebildet ist.

Der dritte Planetenradsatz P3 umfasst ein erstes Getriebeelement P31. Das erste Getriebeelement P31 des dritten Planetenradsatzes P3 ist als ein Sonnenrad ausgebildet. Das erste Getriebeelement P31 des dritten Planetenradsatzes P3 ist permanent drehfest mit dem zweiten Getriebeelement P12 des ersten Planetenradsatzes P1 gekoppelt.

Der dritte Planetenradsatz P3 umfasst ein zweites Getriebeelement P32. Das zweite Getriebeelement P32 des dritten Planetenradsatzes P3 ist als ein Planetenradträger ausgebildet. Das zweite Getriebeelement P32 des dritten Planetenradsatzes P3 ist permanent drehfest mit der Getriebeabtriebswelle 18 gekoppelt.

Das zweite Getriebeelement P12 des ersten Planetenradsatzes P2 ist über das erste Getriebeelement P31 des dritten Planetenradsatzes P3 und über das zweite Getriebeelement P32 des dritten Planetenradsatzes P3 mit der Getriebeabtriebswelle 18 gekoppelt.

Der dritte Planetenradsatz P3 umfasst ein drittes Getriebeelement P33. Das dritte Getriebeelement P33 des dritten Planetenradsatzes P3 ist als ein Hohlrad ausgebildet.

Ferner umfasst der dritte Planetenradsatz P3 Planetenräder P34, die auf dem als Planetenradträger ausgebildeten zweiten Getriebeelement P32 gelagert sind.

Eine erste Zahnradebene Z1 der Zahnradebenen Z1-Z10 liegt der Kupplung K1, insbesondere auch der Antriebseinheit 40, in Bezug auf restliche Zahnradebenen Z2-Z10 am nächsten. Die erste Zahnradebene Z1 ist als Einfachstirnradebene ausgebildet. Die erste Zahnradebene Z1 weist ein erstes Losrad 46 auf. Das erste Losrad 46 der ersten Zahnradebene Z1 ist koaxial zu der Eingangswelle 12 angeordnet. Das erste Losrad 46 der ersten Zahnradebene Z1 ist drehbar auf der Eingangswelle 12 gelagert. Das erste Losrad 46 der ersten Zahnradebene Z1 bildet ein erstes Losrad 46 der Eingangswelle 12. Das erste Losrad 46 ist permanent drehfest mit dem ersten Getriebeelement P21 des zweiten Planetenradsatzes P2 gekoppelt. Die erste Zahnradebene Z1 weist ein zweites Losrad 48 auf. Das erste Losrad 46 der ersten Zahnradebene Z1 und das zweite Losrad 48 der ersten Zahnradebene Z1 bilden eine Zahnradpaarung der ersten Zahnradebene Z1 aus. Das erste Losrad 46 der ersten Zahnradebene Z1 und das zweite Losrad 48 der ersten Zahnradebene Z1 sind permanent kämmend miteinander verbunden.

Eine zweite Zahnradebene Z2 der Zahnradebenen Z1-Z10 liegt der ersten Zahnradebene Z1 in Bezug auf restliche Zahnradebenen Z3-Z10 am nächsten. Die zweite Zahnradebene Z2 ist als Einfachstirnradebene ausgebildet. Die zweite Zahnradebene Z2 weist ein Losrad 26 auf. Das Losrad 26 der zweiten Zahnradebene Z2 ist koaxial zu der Eingangswelle 12 angeordnet. Das Losrad 26 der zweiten Zahnradebene Z2 ist drehbar auf der Eingangswelle 12 gelagert. Das Losrad 26 der zweiten Zahnradebene Z2 bildet ein zweites Losrad 26 der Eingangswelle 12. Die zweite Zahnradebene Z2 weist ein Festrad 28 auf. Das Festrad 28 der zweiten Zahnradebene Z2 ist koaxial zu der Vorgelegewelle 16 angeordnet. Das Festrad 28 der zweiten Zahnradebene Z2 ist permanent drehfest mit der Vorgelegewelle 16 verbunden. Das Festrad 28 der zweiten Zahnradebene Z2 bildet ein erstes Festrad 28 der Vorgelegewelle 16. Das Losrad 26 der zweiten Zahnradebene Z2 und das Festrad 28 der zweiten Zahnradebene Z2 bilden eine Zahnradpaarung der zweiten Zahnradebene Z2 aus. Das Losrad 26 der zweiten Zahnradebene Z2 und das Festrad 28 der zweiten Zahnradebene Z2 sind permanent kämmend miteinander verbunden. Das Losrad 26 der zweiten Zahnradebene Z2 steht mit dem ersten Festrad 28 der Vorgelegewelle 16 permanent in Eingriff.

Das erste Getriebeelement P21 des zweiten Planetenradsatzes P2 ist mit der Vorgelegewelle 16 derart koppelbar, dass ein Moment, das ausgehend von dem zweiten Planetenradsatz P2 auf die Vorgelegewelle 16 übertragen werden soll, an dem ersten Getriebeelement P21 des zweiten Planetenradsatzes P2 aus dem zweiten Planetenradsatz P2 ausgeleitet wird.

Mittels der zweiten Zahnradebene Z2 ist das erste Getriebeelement P21 des zweiten Planetenradsatzes P2 vorteilhaft über genau eine erste Übersetzungsstufe U1 mit der Vorgelegewelle 16 koppelbar.

Die dritte Zahnradebene Z3 liegt den ersten zwei Zahnradebenen Z1 und Z2 in Bezug auf restliche Zahnradebenen Z4-Z10 am nächsten. Eine vierte Zahnradebene Z4 der Zahnradebenen Z1-Z10 liegt den ersten drei Zahnradebenen Z1-Z3 in Bezug auf restliche Zahnradebenen Z5-Z10 am nächsten. Die vierte Zahnradebene Z4 ist als Einfachstirnradebene ausgebildet. Die vierte Zahnradebene Z4 weist ein erstes Losrad 32 auf. Das erste Losrad 32 der vierten Zahnradebene Z4 ist koaxial zu der Zwischenwelle 14 angeordnet. Das erste Losrad 32 der vierten Zahnradebene Z4 ist drehbar auf der Zwischenwelle 14 gelagert. Das erste Losrad 32 der vierten Zahnradebene Z4 bildet ein erstes Losrad 32 der Zwischenwelle 14. Die vierte Zahnradebene Z4 weist ein zweites Losrad 50 auf. Das erste Losrad 32 der vierten Zahnradebene Z4 und das zweite Losrad 50 der vierten Zahnradebene Z4 bilden eine erste Zahnradpaarung der vierten Zahnradebene Z4 aus. Das erste Losrad 32 der vierten Zahnradebene Z4 und das zweite Losrad 50 der vierten Zahnradebene Z4 sind permanent kämmend miteinander verbunden. Die vierte Zahnradebene Z4 weist ein Festrad 34 auf. Das Festrad 34 der vierten Zahnradebene Z4 ist koaxial zu der Vorgelegewelle 16 angeordnet. Das Festrad 34 der vierten Zahnradebene Z4 ist permanent drehfest mit der Vorgelegewelle 16 verbunden. Das Festrad 34 der vierten Zahnradebene Z4 bildet ein zweites Festrad 34 der Vorgelegewelle 16. Das Festrad 34 der vierten Zahnradebene Z4 bildet ein zweites Gangrad aus. Das erste Losrad 32 der vierten Zahnradebene Z4 und das Festrad 34 der vierten Zahnradebene Z4 bilden eine zweite Zahnradpaarung der vierten Zahnradebene Z4 aus. Das erste Losrad 32 der vierten Zahnradebene Z4 und das Festrad 34 der vierten Zahnradebene Z4 sind permanent kämmend miteinander verbunden. Das erste Losrad 32 der Zwischenwelle 14 steht permanent in Eingriff mit dem zweiten Festrad 34 der Vorgelegewelle 16.

Eine fünfte Zahnradebene Z5 der Zahnradebenen Z1-Z10 liegt den ersten vier Zahnradebenen Z1-Z4 in Bezug auf restliche Zahnradebenen Z6-Z10 am nächsten. Die fünfte Zahnradebene Z5 ist als Einfachstirnradebene ausgebildet. Die fünfte Zahnradebene Z5 weist ein Losrad 36 auf. Das Losrad 36 der fünften Zahnradebene Z5 ist koaxial zu der Zwischenwelle 14 angeordnet. Das Losrad 36 der fünften Zahnradebene Z5 ist drehbar auf der Zwischenwelle 14 gelagert. Das Losrad 36 der fünften Zahnradebene Z5 bildet ein zweites Losrad 36 der Zwischenwelle 14. Die fünfte Zahnradebene Z5 weist ein Festrad 52 auf. Das Festrad 52 der fünften Zahnradebene Z5 ist koaxial zu der Vorgelegewelle 16 angeordnet. Das Festrad 52 der fünften Zahnradebene Z5 ist permanent drehfest mit der Vorgelegewelle 16 verbunden. Das Festrad 52 der fünften Zahnradebene Z5 bildet ein drittes Festrad 52 der Vorgelegewelle 16. Das Festrad 52 der fünften Zahnradebene Z5 bildet ein erstes Gangrad aus. Das Losrad 36 der fünften Zahnradebene Z5 und das Festrad 52 der fünften Zahnradebene Z5 bilden eine Zahnradpaarung der fünften Zahnradebene Z5 aus. Das Losrad 36 der fünften Zahnradebene Z5 und das Festrad 52 der fünften Zahnradebene Z5 sind permanent kämmend miteinander verbunden.

Eine sechste Zahnradebene Z6 der Zahnradebenen Z1-Z10 liegt den ersten fünf Zahnradebenen Z1-Z5 in Bezug auf restliche Zahnradebenen Z7-Z10 am nächsten. Die sechste Zahnradebene Z6 ist als Einfachstirnradebene ausgebildet. Die sechste Zahnradebene Z6 weist ein Losrad 54 auf. Das Losrad 54 der sechsten Zahnradebene Z6 ist koaxial zu der Zwischenwelle 14 angeordnet. Das Losrad 54 der sechsten Zahnradebene Z6 ist drehbar auf der Zwischenwelle 14 gelagert. Das Losrad 54 der sechsten Zahnradebene Z6 bildet ein drittes Losrad 54 der Zwischenwelle 14. Das Losrad 54 der sechsten Zahnradebene Z6 ist permanent drehfest mit dem dritten Getriebeelement P13 des ersten Planetenradsatzes P1 gekoppelt.

Eine siebte Zahnradebene Z7 der Zahnradebenen Z1-Z10 liegt den ersten sechs Zahnradebenen Z1-Z6 in Bezug auf restliche Zahnradebenen Z8-Z10 am nächsten. Die siebte Zahnradebene Z7 ist als Einfachstirnradebene ausgebildet. Die siebte Zahnradebene Z7 weist ein Losrad 24 auf. Das Losrad 24 der siebten Zahnradebene Z7 ist koaxial zu der Zwischenwelle 14 angeordnet. Das Losrad 24 der siebten Zahnradebene Z7 ist drehbar auf der Zwischenwelle 14 gelagert. Das Losrad 24 der siebten Zahnradebene Z7 bildet ein viertes Losrad 54 der Zwischenwelle 14.

Das Losrad 24 der siebten Zahnradebene Z7 bildet ein zweites Schaltzahnrad aus. Das dritte Getriebeelement P13 des ersten Planetenradsatzes P1 ist permanent drehfest mit dem Losrad 24 der siebten Zahnradebene Z7 gekoppelt.

Die achte Zahnradebene Z8 liegt den ersten sieben Zahnradebenen Z1-Z7 in Bezug auf restliche Zahnradebenen Z9 und Z10 am nächsten. Die neunte Zahnradebenen Z9 liegt den ersten acht Zahnradebenen Z1-Z8 in Bezug auf eine restliche Zahnradebene Z10 am nächsten. Eine zehnte Zahnradebene Z10 der Zahnradebenen Z1-Z10 ist als Einfachstirnradebene ausgebildet. Die zehnte Zahnradebene Z10 weist ein Losrad 44 auf. Das Losrad 44 der zehnten Zahnradebene Z10 ist koaxial zu der Getriebeabtriebswelle 18 angeordnet. Das Losrad 44 der zehnten Zahnradebene Z10 ist drehbar auf der Getriebeabtriebswelle 18 gelagert. Das Losrad 44 der zehnten Zahnradebene Z10 bildet ein drittes Schaltzahnrad aus. Das dritte Getriebeelement P33 des dritten Planetenradsatzes P3 ist permanent drehfest mit dem Losrad 44 der zehnten Zahnradebene Z10 gekoppelt. Das dritte Getriebeelement P33 des dritten Planetenradsatzes P3 ist permanent drehfest mit dem dritten Schaltzahnrad gekoppelt.

Die Gruppengetriebevorrichtung 10 weist eine Momentenanpassungseinheit 20 auf. Die Momentenanpassungseinheit 20 ist mit der Vorgelegewelle 16 koppelbar.

Die Momentenanpassungseinheit 20 ist mit dem ersten Getriebeelement P21 des zweiten Planetenradsatzes P2 koppelbar. Besonders vorteilhaft für die Schaltbarkeit der Gruppengetriebevorrichtung ist dabei, dass das erste Getriebeelement P21 des zweiten Planetenradsatzes P2 dasjenige Getriebeelement des zweiten Planetenradsatzes ist, über welches ein Moment, ausgehend von der Momentenanpassungseinheit 20, in den zweiten Planetenradsatz einleitbar ist.

Die Momentenanpassungseinheit 20 ist als ein Retarder ausgebildet. Die Momentenanpassungseinheit 20 ist dazu vorgesehen, ein Bremsmoment aufzubauen. Die Momentenanpassungseinheit 20 ist dazu vorgesehen, die Vorgelegewelle 16 zusätzlich abzubremsen, so dass über die Vorgelegewelle 16 auch das erste Getriebeelement P21 mittels der Momentenanpassungseinheit 20 abgebremst werden kann. Die Momentenanpassungseinheit 20 ist zu einer Verringerung eines, insbesondere über die Vorgelegewelle 16, übertragenen Moments vorgesehen. Alternativ oder zusätzlich könnte eine Momentenanpassungseinheit von einer elektrischen Maschine gebildet sein, wobei die elektrische Maschine zu einer Bremseinwirkung als Generator oder zu einem Antrieb betrieben werden kann. Dazu könnte eine Vorgelegewelle mit einem Rotor der Momentenanpassungseinheit gekoppelt oder koppelbar sein. Im Falle der Ausbildung der Momentenanpassungseinheit als elektrische Maschine kann die Schaltbarkeit der Gruppengetriebevorrichtung weiter verbessert werden. Und darüber hinaus kann in diesem Fall aufgrund der für den Fachmann leicht erkennbaren Leistungsverzweigungseigenschaft der Gruppengetriebevorrichtung insgesamt ein Hybridgetriebe dargestellt werden, in welchem die elektrische Maschine nicht nur eine Retarderfunktion und Funktion zur Verbesserung der Schaltbarkeit, sondern auch eine Fahrantriebsfunktion teilweise übernehmen kann.

Grundsätzlich wäre jedoch auch eine andere, einem Fachmann als sinnvoll erscheinende Ausbildung einer Momentenanpassungseinheit denkbar, wie beispielsweise als eine Hydraulikpumpe oder als eine Reibbremse.

Die Gruppengetriebevorrichtung 10 weist die Bremseinheit B auf. Die Bremseinheit B ist in einer Momentenstromrichtung 30 betrachtet axial vor der ersten Zahnradebene Z1 angeordnet. Die Bremseinheit B ist in Momentenstromrichtung 30 betrachtet axial vor dem zweiten Planetenradsatz P2 angeordnet. Die Bremseinheit B ist in Momentenstromrichtung 30 betrachtet axial vor einer zweiten Schalteinheit S2 angeordnet.

Die Bremseinheit B weist ein drehbar gelagertes Kopplungselement 56 auf. Die Bremseinheit B weist ein gehäusefest angeordnetes Kopplungselement 58 auf. Das gehäusefest angeordnete Kopplungselement 58 ist permanent drehfest mit einem Getriebegehäuse 60 verbunden.

Die Bremseinheit B ist dazu vorgesehen, ihr drehbar gelagertes Kopplungselement 56 drehfest mit ihrem gehäusefest angeordneten Kopplungselement 58 zu verbinden. Die Bremseinheit B ist dazu vorgesehen, das erste Getriebeelement P21 des zweiten Planetenradsatzes P2 gehäusefest anzuordnen. Die Bremseinheit B ist dazu vorgesehen, das Losrad 46 der ersten Zahnradebene Z1 gehäusefest anzuordnen.

Die Bremseinheit B weist zwei Stellungen B0, B1 auf. Die Bremseinheit B weist eine geöffnete Stellung B0 auf. In der geöffneten Stellung B0 ist das drehbar gelagerte Kopplungselement 56 gegenüber dem gehäusefest angeordneten Kopplungselement 58 beweglich, insbesondere zumindest im Wesentlichen reibungslos, angeordnet. Ferner weist die Bremseinheit B eine geschlossene Stellung B1 auf. In der geschlossenen Stellung B1 ist das drehbar gelagerte Kopplungselement 56 drehfest mit dem gehäusefest angeordneten Kopplungselement 58 verbunden. In der geschlossenen Stellung B1 ist das erste Getriebeelement P21 des zweiten Planetenradsatzes P2 gehäusefest angeordnet. In der geschlossenen Stellung B1 ist das Losrad 46 der ersten Zahnradebene Z1 gehäusefest angeordnet.

Die Bremseinheit B ist vorteilhaft als eine Klauenbremseinheit ausgebildet. Die Bremseinheit ist vorteilhaft aufgrund der Kombination mit der Momentenanpassungseinheit 20 als Klauenbremseinheit ausgebildet. Die Momentenanpassungseinheit 20 ist dazu ausgebildet, das erste Getriebeelement P21 des zweiten Planetenradsatzes P2 abzubremsen. Die als Klauenbremseinheit B ausgebildete Bremseinheit B kann vorteilhaft geschlossen werden, nachdem mittels der Momentenanpassungseinheit 20 eine Drehzahl des ersten Getriebeelements P21 des zweiten Planetenradsatzes P2 auf null reduziert worden ist.

Die Gruppengetriebevorrichtung 10 umfasst eine Mehrzahl an Schalteinheiten S1-S6. Die Gruppengetriebevorrichtung 10 umfasst sechs Schalteinheiten S1-S6. Die Gruppengetriebevorrichtung 10 weist eine erste Schalteinheit S1 auf.

Die erste Schalteinheit S1 ist dazu ausgebildet den ersten Planetenradsatz P1 zu verblocken und ist auch dazu ausgebildet das dritte Getriebeelement P13 des ersten Planetenradsatzes P1 gehäusefest anzuordnen. Die erste Schalteinheit S1 ist im Ausführungsbeispiel als Doppelschaltelement ausgebildet. Alternativ kann die erste Schalteinheit S1 auch in zwei getrennten Teilen ausgeführt sein, wobei dann ein erster Teil dazu ausgebildet ist, den ersten Planetenradsatz P1 zu verblocken und ein zweiter Teil dazu ausgebildet ist, das dritte Getriebeelement P13 des ersten Planetenradsatzes P1 gehäusefest anzuordnen.

Im Ausführungsbeispiel ist eine axiale Anordnung der ersten Schalteinheit S1 wie folgt: Die erste Schalteinheit S1 ist in Momentenstromrichtung 30 betrachtet axial vor der sechsten Zahnradebene Z6 angeordnet. Die erste Schalteinheit S1 ist in Momentenstromrichtung 30 betrachtet axial hinter der fünften Zahnradebene Z5 angeordnet. Die erste Schalteinheit S1 ist in Momentenstromrichtung 30 betrachtet axial vor dem ersten Planetenradsatz P1 angeordnet. Die erste Schalteinheit S1 ist in Momentenstromrichtung 30 betrachtet axial nach dem zweiten Planetenradsatz P2 angeordnet. Die erste Schalteinheit S1 ist in Momentenstromrichtung 30 betrachtet axial zwischen dem ersten Planetenradsatz P1 und dem zweiten Planetenradsatz P2 angeordnet. Die erste Schalteinheit S1 ist koaxial zu der Zwischenwelle 14 angeordnet.

Die erste Schalteinheit S1 ist vorteilhaft als eine Klauenschalteinheit ausgebildet. Die erste Schalteinheit S1 weist ein Schaltelement 62 auf. Das Schaltelement 62 der ersten Schalteinheit S1 ist vorteilhaft als ein Klauenschaltelement ausgebildet. Das Schaltelement 62 der ersten Schalteinheit S1 ist über einen nicht weiter sichtbaren Aktuator axial verschiebbar ausgebildet. Die erste Schalteinheit S1 weist drei Kopplungselemente 64, 66, 68 auf. Ein erstes Kopplungselement 64 der Kopplungselemente 64, 66, 68 der ersten Schalteinheit S1 ist in Momentenstromrichtung 30 betrachtet axial vor einem zweiten Kopplungselement 66 der Kopplungselemente 64, 66, 68 der ersten Schalteinheit S1 angeordnet. Das zweite Kopplungselement 66 der ersten Schalteinheit S1 ist in Momentenstromrichtung 30 betrachtet axial vor einem dritten Kopplungselement 68 der Kopplungselemente 64, 66, 68 der ersten Schalteinheit S1 angeordnet. Die erste Schalteinheit S1 weist drei Schaltstellungen S11, S1N, S12 auf.

Die erste Schalteinheit S1 weist eine erste Schaltstellung S11 auf. Die erste Schalteinheit S1 ist dazu vorgesehen, in der ersten Schaltstellung S11 der ersten Schalteinheit S1 den ersten Planetenradsatz P1 zu verblocken. Die erste Schalteinheit S1 ist dazu vorgesehen, in der ersten Schaltstellung S11 der ersten Schalteinheit S1 das erste Getriebeelement P11 des ersten Planetenradsatzes P1 mit dem dritten Getriebeelement P13 der ersten Planetenradsatzes P1 drehfest zu koppeln. Das erste Kopplungselement 64 der ersten Schalteinheit S1 ist permanent drehfest mit der Zwischenwelle 14 gekoppelt. Das erste Kopplungselement 64 der ersten Schalteinheit S1 ist permanent drehfest mit dem ersten Getriebeelement P11 des ersten Planetenradsatzes P1, insbesondere über die Zwischenwelle 14, gekoppelt. Das zweite Kopplungselement 66 der ersten Schalteinheit S1 ist permanent drehfest mit dem dritten Getriebeelement P13 des ersten Planetenradsatzes P1 gekoppelt. Das zweite Kopplungselement 66 der ersten Schalteinheit S1 ist permanent drehfest mit dem Losrad 24 der siebten Zahnradebene Z7 gekoppelt. In der ersten Schaltstellung S11 der ersten Schalteinheit S1 sind das erste Kopplungselement 64 der ersten Schalteinheit S1 und das zweite Kopplungselement 66 der ersten Schalteinheit S1 über das Schaltelement 62 der ersten Schalteinheit S1 gekoppelt.

Die erste Schalteinheit S1 weist eine zweite Schaltstellung S12 auf. Die erste Schalteinheit S1 ist dazu vorgesehen, in der zweiten Schaltstellung S12 der ersten Schalteinheit S1 das dritte Getriebeelement P13 des ersten Planetenradsatzes P1 gehäusefest anzuordnen. Die erste Schalteinheit S1 ist dazu vorgesehen, in der zweiten Schaltstellung S12 der ersten Schalteinheit S1 das Losrad 24 der siebten Zahnradebene Z7 gehäusefest anzuordnen. Das dritte Kopplungselement 68 der ersten Schalteinheit S1 ist gehäusefest angeordnet. Das dritte Kopplungselement 68 der ersten Schalteinheit S1 ist permanent drehfest mit dem Getriebegehäuse 60 verbunden. In der zweiten Schaltstellung S12 der ersten Schalteinheit S1 sind das zweite Kopplungselement 66 der ersten Schalteinheit S1 und das dritte Kopplungselement 68 der ersten Schalteinheit S1 über das Schaltelement 62 der ersten Schalteinheit S1 gekoppelt.

Die erste Schalteinheit S1 weist eine neutrale Schaltstellung S1N auf. In der neutralen Schaltstellung S1N der ersten Schalteinheit S1 ist die erste Schalteinheit S1 funktionslos. In der neutralen Schaltstellung S1N der ersten Schalteinheit S1 findet keine Kopplung der Kopplungselemente 64, 66, 68 der ersten Schalteinheit S1 durch das Schaltelement 62 der ersten Schalteinheit S1 statt. In der neutralen Schaltstellung S1N der ersten Schalteinheit S1 ist das Schaltelement 62 der ersten Schalteinheit S1 lediglich mit dem zweiten Kopplungselement 66 der ersten Schalteinheit S1 gekoppelt.

Die Gruppengetriebevorrichtung 10 umfasst die zweite Schalteinheit S2.

Die zweite Schalteinheit S2 ist vorteilhaft dazu ausgebildet, das erste Getriebeelement P21 des zweiten Planetenradsatzes P2 mit der Vorgelegewelle 16 zu koppeln. Im Ausführungsbeispiel ist die zweite Schalteinheit S2 koaxial zu der Eingangswelle 12 angeordnet. Alternativ könnte die zweite Schalteinheit S2 auch koaxial zu der Vorgelegewelle 16 angeordnet sein.

Die zweite Schalteinheit S2 ist vorteilhaft dazu ausgebildet, das erste Getriebeelement P21 des zweiten Planetenradsatzes P2 über die zweite Zahnradebene Z2 mit der Vorgelegewelle 16 zu koppeln.

Die zweite Schalteinheit S2 ist in Momentenstromrichtung 30 betrachtet axial vor dem zweiten Planetenradsatz P2 angeordnet. Die zweite Schalteinheit S2 ist in Momentenstromrichtung 30 betrachtet axial hinter der zweiten Zahnradebene Z2 angeordnet. Die zweite Schalteinheit S2 ist koaxial zu der Eingangswelle 12 angeordnet.

Die zweite Schalteinheit S2 ist vorteilhaft als eine Klauenschalteinheit ausgebildet. Die zweite Schalteinheit S2 weist ein Schaltelement 70 auf. Die zweite Schalteinheit S2 weist drei Kopplungselemente 72, 74, 76 auf. Ein erstes Kopplungselement 72 der Kopplungselemente 72, 74, 76 der zweiten Schalteinheit S2 ist permanent drehfest mit dem Losrad 26 der zweiten Zahnradebene Z2 gekoppelt. Ein zweites Kopplungselement 74 der der Kopplungselemente 72, 74, 76 der zweiten Schalteinheit S2 ist ist permanent drehfest mit dem ersten Getriebeelement P21 des zweiten Planetenradsatzes P2 gekoppelt. Ein drittes Kopplungselement 76 der Kopplungselemente 72, 74, 76 der zweiten Schalteinheit S2 ist permanent drehfest mit dem zweiten Getriebeelement P22 des zweiten Planetenradsatzes P2 gekoppelt.

Die zweite Schalteinheit S2 weist drei Schaltstellungen S21, S2N, S22 auf.

Die zweite Schalteinheit S2 weist eine erste Schaltstellung S21 auf. Die zweite Schalteinheit S2 ist dazu vorgesehen, in der ersten Schaltstellung S21 der zweiten Schalteinheit S2 das erste Getriebeelement P21 des zweiten Planetenradsatzes P2 drehfest mit der Vorgelegewelle 16 zu koppeln. Das erste Getriebeelement P21 des zweiten Planetenradsatzes P2 ist über die zweite Schalteinheit S2 mit dem Losrad 26 der zweiten Zahnradebene Z2 koppelbar. In der ersten Schaltstellung S21 der zweiten Schalteinheit S2 sind das erste Kopplungselement 72 der zweiten Schalteinheit S2 und das zweite Kopplungselement 74 der zweiten Schalteinheit S2 über das Schaltelement 70 der zweiten Schalteinheit S2 gekoppelt.

Die zweite Schalteinheit S2 weist eine zweite Schaltstellung S22 auf. Die zweite Schalteinheit S2 ist dazu vorgesehen, in der zweiten Schaltstellung S22 der zweiten Schalteinheit S2 den zweiten Planetenradsatz P2 zu verblocken. Die zweite Schalteinheit S2 ist dazu vorgesehen, in der zweiten Schaltstellung S22 der zweiten Schalteinheit S2 das erste Getriebeelement P21 des zweiten Planetenradsatzes P2 mit dem zweiten Getriebeelement P22 des zweiten Planetenradsatzes P2 drehfest zu koppeln. In der zweiten Schaltstellung S22 der zweiten Schalteinheit S2 sind das zweite Kopplungselement 74 der zweiten Schalteinheit S2 und das dritte Kopplungselement 76 der zweiten Schalteinheit S2 über das Schaltelement 70 der zweiten Schalteinheit S2 gekoppelt.

In diesem Ausführungsbeispiel ist die zweite Schalteinheit S2 als Doppelschalteinheit ausgeführt. Alternativ und auf äquivalente Weise kann die zweite Schalteinheit S2 auch in einer geteilten Form ausgebildet sein, wobei ein erster Teil die erste Schaltstellung S21 realisiert und ein zweiter Teil die zweite Schaltstellung S22 realisiert.

Die zweite Schalteinheit S2 weist eine neutrale Schaltstellung S2N auf.

Die Gruppengetriebevorrichtung 10 umfasst eine dritte Schalteinheit S3.

Die dritte Schalteinheit S3 ist vorteilhaft dazu vorgesehen, die Vorgelegewelle 16 mit dem dritten Getriebeelement P13 des ersten Planetenradsatzes P1 zu koppeln. Die dritte Schalteinheit S3 ist besonders vorteilhaft dazu vorgesehen, das erste Element P21 des zweiten Planetenradsatzes P2 über die Vorgelegewelle 16 mit dem dritten Getriebeelement P13 des ersten Planetenradsatzes P1 zu koppeln.

Die Schalteinheit S3 ist im Ausbildungsbeispiel vorteilhaft koaxial zu der Vorgelegewelle 16 angeordnet. Die Schalteinheit S3 kann alternativ aber auch koaxial zu der Zwischenwelle 14 angeordnet werden.

Die dritte Schalteinheit S3 ist vorteilhaft in Momentenstromrichtung 30 betrachtet axial hinter der fünften Zahnradebene Z5 angeordnet. Die dritte Schalteinheit S3 ist koaxial zu der Vorgelegewelle 16 angeordnet. Die dritte Schalteinheit S3 ist axial verschiebbar auf der Vorgelegewelle 16 angeordnet.

Die dritte Schalteinheit S3 weist drei Schaltstellungen S31, S3N, S32 auf. Die dritte Schalteinheit S3 ist dazu vorgesehen, durch axiale Verschiebung zwischen den Schaltstellungen S31, S3N, S32 zu wechseln. Die dritte Schalteinheit S3 weist eine erste Schaltstellung S31 auf. Die dritte Schalteinheit S3 weist eine neutrale Schaltstellung S3N auf. Die dritte Schalteinheit S3 weist eine zweite Schaltstellung S32 auf.

Die dritte Schalteinheit S3 weist ein erstes Schaltzahnrad 22 auf. Das erste Schaltzahnrad 22 der dritten Schalteinheit S3 ist axial verschiebbar auf der Vorgelegewelle 16 angeordnet. Das erste Schaltzahnrad 22 der dritten Schalteinheit S3 ist permanent drehfest auf der Vorgelegewelle 16 angeordnet. Das erste Schaltzahnrad 22 der dritten Schalteinheit S3 ist koaxial zu der Vorgelegewelle 16 angeordnet. Das erste Schaltzahnrad 22 der dritten Schalteinheit S3 ist mit dem zweiten Schaltzahnrad 24 der siebten Zahnradebene Z7 in Eingriff bringbar. Das erste Schaltzahnrad 22 der dritten Schalteinheit S3 ist in der ersten Schaltstellung S31 mit dem zweiten Schaltzahnrad 24 der siebten Zahnradebene Z7 in Eingriff. Das erste Schaltzahnrad 22 ist als ein drittes Gangrad ausgebildet.

Mittels des ersten Schaltzahnrades 22 der dritten Schalteinheit S3 und des zweiten Schaltzahnrades 24 der siebten Zahnradebene Z7 ist die Vorgelegewelle 16 über genau eine zweite Übersetzungsstufe U2 mit dem dritten Getriebeelement P13 des ersten Planetenradsatzes P1 koppelbar.

Da mittels der zweiten Zahnradebene Z2 das erste Getriebeelement P21 des zweiten Planetenradsatzes P2 über genau eine, nämlich die erste, Übersetzungsstufe U1 mit der Vorgelegewelle 16 koppelbar ist und da die Vorgelegewelle 16 über genau eine, nämlich die zweite, Übersetzungsstufe U2 mit dem dritten Getriebeelement (P13) des ersten Planetenradsatzes P1 koppelbar ist, ist erfindungsgemäß das erste Getriebeelement P21 des zweiten Planetenradsatzes P2 über genau zwei Übersetzungsstufen U1 und U2 über die Vorgelegewelle 16 mit dem dritten Getriebeelement P13 des ersten Planetenradsatzes P1 koppelbar.

Somit ist besonders vorteilhaft das dritte Getriebeelement P13 des ersten Planetenradsatzes P1 mittels der ersten Schalteinheit S1 bremsbar, und das dritte Getriebeelement P13 des ersten Planetenradsatzes ist nicht drehfest mit der Abtriebswelle 19 des ersten Planetenradsatzes P1 verbunden, sondern das dritte Getriebeelement P13 ist über das zweite Getriebeelement P12 mit der Abtriebswelle 19 gekoppelt.

Die dritte Schalteinheit S3 ist dazu vorgesehen, die Vorgelegewelle 16 mit dem dritten Getriebeelement P13 des ersten Planetenradsatzes P1 zu koppeln. Die dritte Schalteinheit S3 ist dazu vorgesehen, in der ersten Schaltstellung S31 die Vorgelegewelle 16 mit dem dritten Getriebeelement P13 des ersten Planetenradsatzes P1 zu koppeln.

Die dritte Schalteinheit S3 weist ein viertes Schaltzahnrad 78 auf. Das vierte Schaltzahnrad 78 der dritten Schalteinheit S3 ist axial verschiebbar auf der Vorgelegewelle 16 angeordnet. Das vierte Schaltzahnrad 78 der dritten Schalteinheit S3 ist permanent drehfest auf der Vorgelegewelle 16 angeordnet. Das vierte Schaltzahnrad 78 der dritten Schalteinheit S3 ist koaxial zu der Vorgelegewelle 16 angeordnet. Das vierte Schaltzahnrad 78 der dritten Schalteinheit S3 ist permanent drehfest mit dem ersten Schaltzahnrad 22 der dritten Schalteinheit S3 verbunden. Das vierte Schaltzahnrad 78 der dritten Schalteinheit S3 weist zu dem ersten Schaltzahnrad 22 der dritten Schalteinheit S3 einen festen axialen Abstand auf. Das vierte Schaltzahnrad 78 der dritten Schalteinheit S3 ist mit dem dritten Losrad 44 der zehnten Zahnradebene Z10 in Eingriff bringbar. Das vierte Schaltzahnrad 78 der dritten Schalteinheit S3 ist in der zweiten Schaltstellung S32 mit dem dritten Losrad 44 der zehnten Zahnradebene Z10 in Eingriff. Die dritte Schalteinheit S3 ist dazu vorgesehen, die Vorgelegewelle 16 drehfest mit dem dritten Getriebeelement P33 des dritten Planetenradsatzes P1 zu koppeln.

Die dritte Schalteinheit S3 ist dazu vorgesehen, in der zweiten Schaltstellung S32 die Vorgelegewelle 16 drehfest mit dem dritten Getriebeelement P33 des dritten Planetenradsatzes P1 zu koppeln.

Die dritte Schalteinheit S3 weist eine neutrale Schaltstellung S3N auf. In der neutralen Schaltstellung S3N der ersten Schalteinheit S3 ist die erste Schalteinheit S3 funktionslos. Wie in Figur 2 dargestellt ist in der neutralen Schaltstellung S3N der ersten Schalteinheit S3 keines der Schaltzahnräder 22, 78 mit einem anderen Zahnrad in Eingriff.

Die Gruppengetriebevorrichtung 10 weist eine vierte Schalteinheit S4 auf.

Die vierte Schalteinheit S4 ist vorteilhaft dazu vorgesehen, die Vorgelegewelle 16 mit der Zwischenwelle 14 über zumindest ein Übersetzungsverhältnis zu koppeln.

Die vierte Schalteinheit S4 ist in Momentenstromrichtung 30 betrachtet axial vor der fünften Zahnradebene Z5 angeordnet. Die vierte Schalteinheit S4 ist in Momentenstromrichtung 30 betrachtet axial nach der vierten Zahnradebene Z4 angeordnet. Die vierte Schalteinheit S4 ist in Momentenstromrichtung 30 betrachtet axial vor dem ersten Planetenradsatz P1 angeordnet. Die vierte Schalteinheit S4 ist in Momentenstromrichtung 30 betrachtet axial nach dem zweiten Planetenradsatz P2 angeordnet. Die vierte Schalteinheit S4 ist koaxial zu der Zwischenwelle 14 angeordnet.

Die vierte Schalteinheit S4 ist als eine Klauenschalteinheit ausgebildet. Die vierte Schalteinheit S4 weist ein Schaltelement 82 auf. Die vierte Schalteinheit S4 weist drei Kopplungselemente 84, 86, 88 auf.

Die vierte Schalteinheit S4 weist im Ausführungsbeispiel eine erste Schaltstellung S41 für eine Kopplung der Vorgelegewelle 16 mit der Zwischenwelle 14 über ein erstes Übersetzungsverhältnis auf. Die vierte Schalteinheit S4 ist dazu vorgesehen, in der ersten Schaltstellung S41 der vierten Schalteinheit S4 das erste Losrad 32 der Zwischenwelle 14 drehfest mit der Zwischenwelle 14 zu koppeln. Ein erstes Kopplungselement 84 der Kopplungselemente 84, 86, 88 der vierten Schalteinheit S4 ist permanent drehfest mit dem ersten Losrad 32 der Zwischenwelle 14 gekoppelt. Ein zweites Kopplungselement 86 der Kopplungselemente 84, 86, 88 der vierten Schalteinheit S4 ist permanent drehfest mit der Zwischenwelle 14 gekoppelt. Das zweite Kopplungselement 86 der vierten Schalteinheit S4 ist permanent drehfest mit dem ersten Getriebeelement P11 des ersten Planetenradsatzes P1, insbesondere über die Zwischenwelle 14, gekoppelt. In der ersten Schaltstellung S41 der vierten Schalteinheit S4 sind das erste Kopplungselement 84 der vierten Schalteinheit S4 und das zweite Kopplungselement 86 der vierten Schalteinheit S4 über das Schaltelement 82 der vierten Schalteinheit S4 gekoppelt.

Die vierte Schalteinheit S4 weist im Ausführungsbeispiel eine zweite Schaltstellung S42 für eine Kopplung der Vorgelegewelle 16 mit der Zwischenwelle 14 über ein zweites Übersetzungsverhältnis auf. Die vierte Schalteinheit S4 ist dazu vorgesehen, in der zweiten Schaltstellung S42 der vierten Schalteinheit S4 das zweite Losrad 36 der Zwischenwelle 14 drehfest mit der Zwischenwelle 14 zu koppeln. Ein drittes Kopplungselement 88 der Kopplungselemente 84, 86, 88 der vierten Schalteinheit S4 ist permanent drehfest mit dem zweiten Losrad 36 der Zwischenwelle 14 gekoppelt. In der zweiten Schaltstellung S42 der vierten Schalteinheit S4 sind das zweite Kopplungselement 86 der vierten Schalteinheit S4 und das dritte Kopplungselement 88 der vierten Schalteinheit S4 über das Schaltelement 82 der vierten Schalteinheit S4 gekoppelt.

Die vierte Schalteinheit S4 weist eine neutrale Schaltstellung S4N auf. Eine Schaltung des Schaltelements 82 der vierten Schalteinheit S4 mit den Kopplungselementen 84, 86, 88 der vierten Schalteinheit S4 ist analog zu einer Schaltung des Schaltelements 62 der ersten Schalteinheit S1 mit den Kopplungselementen 64, 66, 68 der ersten Schalteinheit S1 ausgebildet.

Die Gruppengetriebevorrichtung 10 weist eine fünfte Schalteinheit S5 auf.

Die fünfte Schalteinheit S5 ist dazu ausgebildet, den dritten Planetenradsatz P3 zu verblocken und ist auch dazu ausgebildet das dritte Getriebeelement P33 des dritten Planetenradsatzes P3 gehäusefest anzuordnen. Die fünfte Schalteinheit S5 ist im Ausführungsbeispiel als Doppelschaltelement ausgebildet. Alternativ kann die fünfte Schalteinheit S5 auch in zwei getrennten Teilen ausgeführt sein, wobei dann ein erster Teil dazu ausgebildet ist, den dritten Planetenradsatz P3 zu verblocken und ein zweiter Teil dazu ausgebildet ist, das dritte Getriebeelement P33 des dritten Planetenradsatzes P3 gehäusefest anzuordnen.

Die fünfte Schalteinheit S5 ist vorteilhaft in Momentenstromrichtung 30 betrachtet axial hinter der zehnten Zahnradebene Z10 angeordnet. Die fünfte Schalteinheit S5 ist in Momentenstromrichtung 30 betrachtet axial hinter dem dritten Planetenradsatz P3 angeordnet. Die fünfte Schalteinheit S5 ist koaxial zu der Getriebeabtriebswelle 18 angeordnet.

Die fünfte Schalteinheit S5 ist als eine Klauenschalteinheit ausgebildet. Die fünfte Schalteinheit S5 weist ein Schaltelement 90 auf. Das Schaltelement 90 der fünften Schalteinheit S5 entspricht dem Schaltelement 62 der ersten Schalteinheit S1. Die fünfte Schalteinheit S5 weist drei Kopplungselemente 92, 94, 96 auf. Ein erstes Kopplungselement 92 der Kopplungselemente 92, 94, 96 der fünften Schalteinheit S5 ist in Momentenstromrichtung 30 betrachtet axial vor einem zweiten Kopplungselement 94 der Kopplungselemente 92, 94, 96 der fünften Schalteinheit S5 angeordnet. Das zweite Kopplungselement 94 der fünften Schalteinheit S5 ist in Momentenstromrichtung 30 betrachtet axial vor einem dritten Kopplungselement 96 der Kopplungselemente 92, 94, 96 der fünften Schalteinheit S5 angeordnet. Die fünfte Schalteinheit S5 weist drei Schaltstellungen S51, S5N, S52 auf.

Die fünfte Schalteinheit S5 weist eine erste Schaltstellung S51 auf. Die fünfte Schalteinheit S5 ist dazu vorgesehen, in der ersten Schaltstellung S51 der fünften Schalteinheit S5 das dritte Getriebeelement P33 des dritten Planetenradsatzes P3 gehäusefest anzuordnen. Die fünfte Schalteinheit S5 ist dazu vorgesehen, in der ersten Schaltstellung S51 der fünften Schalteinheit S5 das Losrad 44 der zehnten Zahnradebene Z10 gehäusefest anzuordnen. Das erste Kopplungselement 92 der fünften Schalteinheit S5 ist gehäusefest angeordnet. Das erste Kopplungselement 92 der fünften Schalteinheit S5 ist permanent drehfest mit dem Getriebegehäuse 60 verbunden. Das zweite Kopplungselement 94 der fünften Schalteinheit S5 ist permanent drehfest mit dem dritten Getriebeelement P33 des dritten Planetenradsatzes P3 gekoppelt. Das zweite Kopplungselement 94 der fünften Schalteinheit S5 ist permanent drehfest mit dem Losrad 44 der zehnten Zahnradebene Z10 gekoppelt. In der ersten Schaltstellung S51 der fünften Schalteinheit S5 sind das erste Kopplungselement 92 der fünften Schalteinheit S5 und das zweite Kopplungselement 94 der fünften Schalteinheit S5 über das Schaltelement 90 der fünften Schalteinheit S5 gekoppelt.

Die fünfte Schalteinheit S5 weist eine zweite Schaltstellung S52 auf. Die fünfte Schalteinheit S5 ist dazu vorgesehen, in der zweiten Schaltstellung S52 der fünften Schalteinheit S5 den dritten Planetenradsatz P3 zu verblocken. Die fünfte Schalteinheit S5 ist dazu vorgesehen, in der zweiten Schaltstellung S52 der fünften Schalteinheit S5 das erste Getriebeelement P31 des dritten Planetenradsatzes P3 mit dem dritten Getriebeelement P33 des dritten Planetenradsatzes P3 drehfest zu koppeln. Das dritte Kopplungselement 96 der fünften Schalteinheit S5 ist permanent drehfest mit der Getriebeabtriebswelle 18 gekoppelt. In der zweiten Schaltstellung S52 der fünften Schalteinheit S5 sind das erste Kopplungselement 92 der fünften Schalteinheit S5 und das zweite Kopplungselement 94 der fünften Schalteinheit S5 über das Schaltelement 90 der fünften Schalteinheit S5 gekoppelt.

Die fünfte Schalteinheit S5 weist eine neutrale Schaltstellung S5N auf. Eine Schaltung des Schaltelements 90 der fünften Schalteinheit S5 mit den Kopplungselementen 92, 94, 96 der fünften Schalteinheit S5 ist analog zu einer Schaltung des Schaltelements 62 der ersten Schalteinheit S1 mit den Kopplungselementen 64, 66, 68 der ersten Schalteinheit S1 ausgebildet.

Die Gruppengetriebevorrichtung 10 weist eine sechste Schalteinheit S6 auf. Die sechste Schalteinheit ist dazu ausgebildet, die Momentenanpassungseinheit 20 mit dem ersten Getriebeelement P21 des zweiten Planetenradsatzes P2 zu koppeln.

Die sechste Schalteinheit S6 ist zusätzlich dazu ausgebildet, die Momentenanpassungseinheit 20 mit der Vorgelegewelle 16 zu koppeln.

Die sechste Schalteinheit S6 ist in Momentenstromrichtung 30 betrachtet axial vor dem zweiten Planetenradsatz P2 angeordnet. Die sechste Schalteinheit S6 ist in Momentenstromrichtung 30 betrachtet hinter der ersten Zahnradebene Z1 angeordnet. Die sechste Schalteinheit S6 ist versetzt zu der Eingangswelle 12 angeordnet. Die sechste Schalteinheit S6 ist versetzt zu der Vorgelegewelle 16 angeordnet.

Die sechste Schalteinheit S6 ist als eine Klauenschalteinheit ausgebildet. Die sechste Schalteinheit S6 weist ein Schaltelement 98 auf. Die sechste Schalteinheit S6 weist drei Kopplungselemente 100, 102, 104 auf. Ein erstes Kopplungselement 100 der Kopplungselemente 100, 102, 104 der sechsten Schalteinheit S6 ist in Momentenstromrichtung 30 betrachtet axial vor einem zweiten Kopplungselement 102 der Kopplungselemente 100, 102, 104 der sechsten Schalteinheit S6 angeordnet. Das zweite Kopplungselement 102 der sechsten Schalteinheit S6 ist in Momentenstromrichtung 30 betrachtet axial vor einem dritten Kopplungselement 104 der Kopplungselemente 100, 102, 104 der sechsten Schalteinheit S6 angeordnet. Die sechste Schalteinheit S6 weist drei Schaltstellungen S61, S6N, S62 auf.

Die sechste Schalteinheit S6 weist eine erste Schaltstellung S61 auf. Die sechste Schalteinheit S6 ist dazu vorgesehen, in der ersten Schaltstellung S61 der sechsten Schalteinheit S6 das zweite Losrad 48 der ersten Zahnradebene Z1 drehfest mit der Momentenanpassungseinheit 20 zu koppeln.

Die sechste Schalteinheit S6 ist dazu vorgesehen, in der ersten Schaltstellung S61 der sechsten Schalteinheit S6 die Momentenanpassungseinheit 20 über die Zahnradpaarung der ersten Zahnradebene Z1 mit dem ersten Getriebeelement P21 des zweiten Planetenradsatzes P2 zu koppeln.

Das erste Kopplungselement 100 der sechsten Schalteinheit S6 ist permanent drehfest mit dem zweiten Losrad 48 der ersten Zahnradebene Z1 gekoppelt. Das zweite Kopplungselement 102 der sechsten Schalteinheit S6 ist permanent drehfest mit der Momentenanpassungseinheit 20 gekoppelt. In der ersten Schaltstellung S61 der sechsten Schalteinheit S6 sind das erste Kopplungselement 100 der sechsten Schalteinheit S6 und das zweite Kopplungselement 102 der sechsten Schalteinheit S6 über das Schaltelement 98 der sechsten Schalteinheit S6 gekoppelt.

Die sechste Schalteinheit S6 weist eine zweite Schaltstellung S62 auf. Die sechste Schalteinheit S6 ist dazu vorgesehen, in der zweiten Schaltstellung S62 der sechsten Schalteinheit S6 das zweite Losrad 50 der vierten Zahnradebene Z4 drehfest mit der Momentenanpassungseinheit 20 zu koppeln. Die sechste Schalteinheit S6 ist dazu vorgesehen, in der zweiten Schaltstellung S62 der sechsten Schalteinheit S6 die Momentenanpassungseinheit 20 mit der Vorgelegewelle 16 zu koppeln. Die sechste Schalteinheit S6 ist dazu vorgesehen, in der zweiten Schaltstellung S62 der sechsten Schalteinheit S6 die Momentenanpassungseinheit 20 über die erste Zahnradpaarung der vierten Zahnradebene Z4 und über die zweite Zahnradpaarung der vierten Zahnradebene Z4 mit der Vorgelegewelle 16 zu koppeln. Das dritte Kopplungselement 104 der sechsten Schalteinheit S6 ist permanent drehfest mit dem zweiten Losrad 50 der vierten Zahnradebene Z4 gekoppelt.

Die sechste Schalteinheit S6 weist eine neutrale Schaltstellung S6N auf. Eine Schaltung des Schaltelements 98 der sechsten Schalteinheit S6 mit den Kopplungselementen 100, 102, 104 der sechsten Schalteinheit S6 ist analog zu einer Schaltung des Schaltelements 62 der ersten Schalteinheit S1 mit den Kopplungselementen 64, 66, 68 der ersten Schalteinheit S1 ausgebildet.

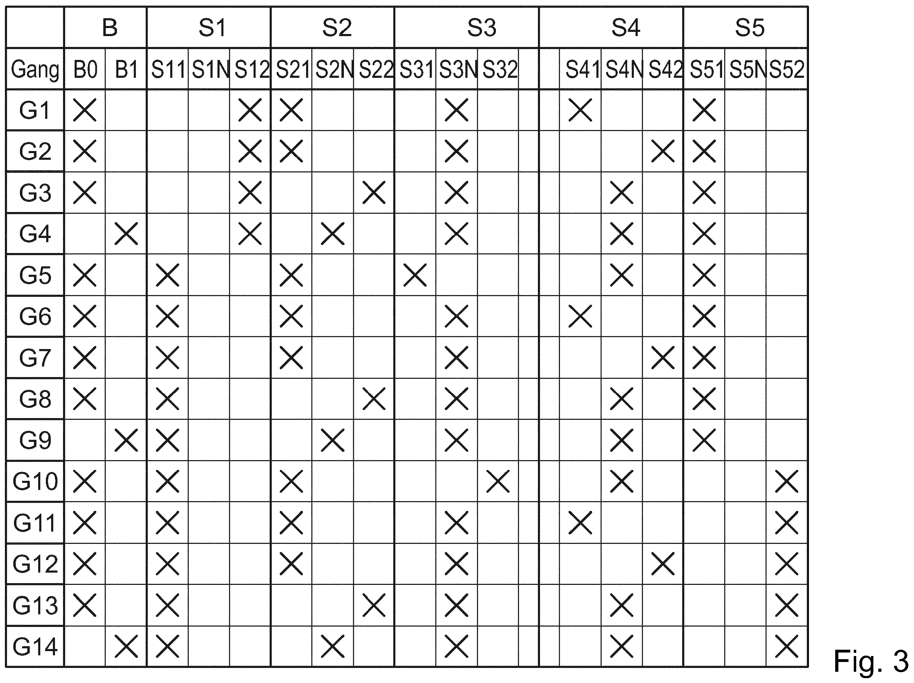

Eine Schaltstrategie zum Schalten der Bremseinheit B und der ersten fünf Schalteinheiten S1-S5 kann der Tabelle in Figur 3 entnommen werden. Es sind vierzehn Getriebegänge G1-G14 schaltbar, insbesondere ein erster Getriebegang G1, ein zweiter Getriebegang G2, ein dritter Getriebegang G3, ein vierter Getriebegang G4, ein fünfter Getriebegang G5, ein sechster Getriebegang G6, ein siebter Getriebegang G7, ein achter Getriebegang G8, ein neunter Getriebegang G9, ein zehnter Getriebegang G10, ein elfter Getriebegang G11, ein zwölfter Getriebegang G12, ein dreizehnter Getriebegang G13 und ein vierzehnter Getriebegang G14. Die Bezugszeichen der Getriebegänge G1-G14 sind nach absteigender Übersetzung der Getriebegänge G1-G14 sortiert. Eine Markierung in der entsprechenden Zeile bedeutet jeweils, dass sich die Bremseinheit B in der der Spalte entsprechenden Stellung B0, B1 oder sich die entsprechende Schalteinheit S1-S5 in der der Spalte entsprechenden Schaltstellung S11, S1N, S12, S21, S2N, S22, S31, S3N, S32, S41, S4N, S42, S51, S5N, S52 befindet, um jeweils den in der ersten Spalte angezeigten Getriebegang G1-G14 zu schalten.

Die Getriebegänge G1-G14 sind mehreren Ganggruppen zugeordnet. Die Getriebegänge G1-G14 sind den drei Ganggruppen zugeordnet. Zwei Schalteinheiten S1, S5 der Schalteinheiten S1-S6 sind zu einer Schaltung der Ganggruppen vorgesehen. Die erste Schalteinheit S1 ist zu einer Schaltung der Ganggruppen vorgesehen. Ferner ist die fünfte Schalteinheit S5 zu einer Schaltung der Ganggruppen vorgesehen.

Eine erste Ganggruppe der Ganggruppen umfasst den ersten Getriebegang G1, den zweiten Getriebegang G2, den dritten Getriebegang G3 und den vierten Getriebegang G4. In der zweiten Schaltstellung S12 der ersten Schalteinheit S1 ist ein Getriebegang G1-G4 der ersten Ganggruppe geschaltet. In kombinierter zweiter Schaltstellung S12 der ersten Schalteinheit S1 und erster Schaltstellung S51 der fünften Schalteinheit S5 ist ein Getriebegang G1-G4 der ersten Ganggruppe geschaltet. Bei den Getriebegängen G1-G4 der ersten Ganggruppe befindet sich die Nachschaltgruppe, insbesondere der erste Planetenradsatz P1 und der dritte Planetenradsatz P3, in einer Range-Iow-Stellung.

Eine zweite Ganggruppe der Ganggruppen umfasst den fünften Getriebegang G5, den sechsten Getriebegang G6, den siebten Getriebegang G7, den achten Getriebegang G8 und den neunten Getriebegang G9. Die Getriebegänge G5-G9 der zweiten Ganggruppe weisen eine geringere Übersetzung auf als die Getriebegänge G1-G4 der ersten Ganggruppe. In kombinierter erster Schaltstellung S11 der ersten Schalteinheit S1 und erster Schaltstellung S51 der fünften Schalteinheit S5 ist ein Getriebegang G5-G9 der zweiten Ganggruppe geschaltet. Bei den Getriebegängen G5-G9 der zweiten Ganggruppe befindet sich ein Planetenradsatz der Nachschaltgruppe, insbesondere der erste Planetenradsatz P1, in einer Range-high-Stellung und ein weiterer Planetenradsatz der Nachschaltgruppe, insbesondere der dritte Planetenradsatz P3, in einer Range-Iow-Stellung.

Ferner umfasst eine dritte Ganggruppe der Ganggruppen den zehnten Getriebegang G10, den elften Getriebegang G11, den zwölften Getriebegang G12, den dreizehnten Getriebegang G13 und den vierzehnten Getriebegang G14. Die Getriebegänge G10-G14 der dritten Ganggruppe weisen eine geringere Übersetzung auf als die Getriebegänge G1-G4 der ersten Ganggruppe. Die Getriebegänge G10-G14 der dritten Ganggruppe weisen eine geringere Übersetzung auf als die Getriebegänge G5-G9 der zweiten Ganggruppe. In der zweiten Schaltstellung S52 der fünften Schalteinheit S5 ist ein Getriebegang G10-G14 der dritten Ganggruppe geschaltet. In kombinierter erster Schaltstellung S11 der ersten Schalteinheit S1 und zweiter Schaltstellung S52 der fünften Schalteinheit S5 ist ein Getriebegang G10-G14 der dritten Ganggruppe geschaltet. Bei den Getriebegängen G10-G14 der dritten Ganggruppe befindet sich die Nachschaltgruppe, insbesondere der erste Planetenradsatz P1 und der dritte Planetenradsatz P3, in einer Range-high-Stellung.

In der ersten Schaltstellung S11 der ersten Schalteinheit S1 ist ein Getriebegang G5-G14 der zweiten Ganggruppe oder der dritten Ganggruppe geschaltet. In der ersten Schaltstellung S51 der fünften Schalteinheit S5 ist ein Getriebegang G1-G9 der ersten Ganggruppe oder der zweiten Ganggruppe geschaltet.

Die Bremseinheit B ist zu einer Schaltung von Getriebegängen G1-G14 innerhalb einer jeden der Ganggruppen vorgesehen. Drei Schalteinheiten S2-S4 der Schalteinheiten S1-S6 sind zu einer Schaltung der Getriebegänge G1-G14 innerhalb jeder der Ganggruppen vorgesehen. Die zweite Schalteinheit S2 ist zu einer Schaltung der Getriebegänge G1-G14 innerhalb jeder der Ganggruppen vorgesehen. Die dritte Schalteinheit S3 ist zu einer Schaltung der Getriebegänge G1-G14 innerhalb jeder der Ganggruppen vorgesehen. Die vierte Schalteinheit S4 ist zu einer Schaltung der Getriebegänge G1-G14 innerhalb jeder der Ganggruppen vorgesehen.

In einem höchsten Getriebegang G4, G9, G14 jeder Ganggruppe ist die Bremseinheit B in der geschlossenen Stellung B1. In dem höchsten Getriebegang G4, G9, G14 jeder Ganggruppe sind die drei Schalteinheiten S2-S4 in einer neutralen Schaltstellung S2N, S3N, S4N der drei Schalteinheiten S2-S4. In dem höchsten Getriebegang G4, G9, G14 jeder Ganggruppe ist die zweite Schalteinheit S2 in der neutralen Schaltstellung S2N der zweiten Schalteinheit S2. In dem höchsten Getriebegang G4, G9, G14 jeder Ganggruppe ist die dritte Schalteinheit S3 in der neutralen Schaltstellung S3N der dritten Schalteinheit S3. In dem höchsten Getriebegang G4, G9, G14 jeder Ganggruppe ist die vierte Schalteinheit S4 in der neutralen Schaltstellung S4N der vierten Schalteinheit S4. Der höchste Getriebegang G4, G9, G14 jeder Ganggruppe ist zumindest von dem zweiten Planetenradsatz P2 als ein Overdrive-Gang übersetzt.

In einem zweithöchsten Getriebegang G3, G8, G13 jeder Ganggruppe ist die Bremseinheit B in der geöffneten Stellung B0. In dem zweithöchsten Getriebegang G3, G8, G13 jeder Ganggruppe ist die zweite Schalteinheit S2 in der zweiten Schaltstellung S22 der zweiten Schalteinheit S2. In dem zweithöchsten Getriebegang G3, G8, G13 jeder Ganggruppe ist die dritte Schalteinheit S3 in der neutralen Schaltstellung S3N der dritten Schalteinheit S3. In dem zweithöchsten Getriebegang G3, G8, G13 jeder Ganggruppe ist die vierte Schalteinheit S4 in der neutralen Schaltstellung S4N der vierten Schalteinheit S4. Der zweithöchste Getriebegang G3, G8, G13 jeder Ganggruppe ist zumindest von dem zweiten Planetenradsatz P2 als ein Direktgang übersetzt.

In einem dritthöchsten Getriebegang G2, G7, G12 jeder Ganggruppe ist die Bremseinheit B in der geöffneten Stellung B0. In dem dritthöchsten Getriebegang G2, G7, G12 jeder Ganggruppe ist die zweite Schalteinheit S2 in der ersten Schaltstellung S21 der zweiten Schalteinheit S2. In dem dritthöchsten Getriebegang G2, G7, G12 jeder Ganggruppe ist die dritte Schalteinheit S3 in der neutralen Schaltstellung S3N der dritten Schalteinheit S3. In dem dritthöchsten Getriebegang G2, G7, G12 jeder Ganggruppe ist die vierte Schalteinheit S4 in der zweiten Schaltstellung S42 der vierten Schalteinheit S4. Der dritthöchste Getriebegang G2, G7, G12 jeder Ganggruppe ist zumindest von dem zweiten Planetenradsatz P2 als ein Reduktionsgang übersetzt.

In einem vierthöchsten Getriebegang G1, G6, G11 jeder Ganggruppe ist die Bremseinheit B in der geöffneten Stellung B0. In dem vierthöchsten Getriebegang G1, G6, G11 jeder Ganggruppe ist die zweite Schalteinheit S2 in der ersten Schaltstellung S21 der zweiten Schalteinheit S2. In dem vierthöchsten Getriebegang G1, G6, G11 jeder Ganggruppe ist die dritte Schalteinheit S3 in der neutralen Schaltstellung S3N der dritten Schalteinheit S3. In dem vierthöchsten Getriebegang G1, G6, G11 jeder Ganggruppe ist die vierte Schalteinheit S4 in der ersten Schaltstellung S41 der vierten Schalteinheit S4. Der vierthöchste Getriebegang G1, G6, G11 jeder Ganggruppe ist zumindest von dem zweiten Planetenradsatz P2 als ein Reduktionsgang übersetzt.

In einem fünfthöchsten Getriebegang G5, G10 der zweiten Ganggruppe und der dritten Ganggruppe ist die Bremseinheit B in der geöffneten Stellung B0. In dem fünfthöchsten Getriebegang G5, G10 der zweiten Ganggruppe und der dritten Ganggruppe ist die zweite Schalteinheit S2 in der ersten Schaltstellung S21 der zweiten Schalteinheit S2. In dem fünfthöchsten Getriebegang G5 der zweiten Ganggruppe ist die dritte Schalteinheit S3 in der ersten Schaltstellung S31 der dritten Schalteinheit S3. In dem fünfthöchsten Getriebegang G10 der dritten Ganggruppe ist die dritte Schalteinheit S3 in der zweiten Schaltstellung S32 der dritten Schalteinheit S3. In dem fünfthöchsten Getriebegang G5, G10 der zweiten Ganggruppe und der dritten Ganggruppe ist die vierte Schalteinheit S4 in der neutralen Schaltstellung S4N der vierten Schalteinheit S4. Der fünfthöchste Getriebegang G5, G10 jeder Ganggruppe ist zumindest von dem zweiten Planetenradsatz P2 als ein Reduktionsgang übersetzt. Ein fünfthöchster Getriebegang entfällt für die erste Ganggruppe.

Je zwei der Getriebegänge G1-G14, welche in der Tabelle der Figur 3 in benachbarten Zeilen angeordnet sind, sind lastschaltbar ausgebildet. Je zwei der Getriebegänge G1-G14 innerhalb jeder Ganggruppe, welche in der Tabelle der Figur 3 in benachbarten Zeilen angeordnet sind, sind lastschaltbar ausgebildet. Der höchste Getriebegang G4 der ersten Ganggruppe und ein niedrigster Getriebegang G5 der zweiten Ganggruppe sind lastschaltbar ausgebildet.

Im Folgenden ist ein Gangwechsel von dem als höchstem Getriebegang der ersten Ganggruppe ausgebildeten vierten Getriebegang G4 in den als niedrigsten Getriebegang der zweiten Ganggruppe ausgebildeten fünften Getriebegang G5 beschrieben. Dabei findet ein Übergang der Übersetzung des ersten Planetenradsatzes P1 von der Rangelow-Stellung zu der Range-high-Stellung statt.

In einem ersten Schaltschritt des Gangwechsels ist die dritte Schalteinheit S3 dazu vorgesehen, von der neutralen Schaltstellung S3N der dritten Schalteinheit S3 in die erste Schaltstellung S31 der dritten Schalteinheit S3 überzugehen, so dass die Vorgelegewelle 16 mit dem dritten Getriebeelement P13 des ersten Planetenradsatzes P1 drehmomentübertragend gekoppelt wird. Dabei sind die zweite Schalteinheit S2 und die vierte Schalteinheit S4 in der neutralen Schaltstellung S2N, S4N und somit liegt an der Vorgelegewelle 16 und dem ersten Schaltzahnrad 22 kein Drehmoment an. Ferner ist dabei das zweite Schaltzahnrad über die in der zweiten Schaltstellung S12 befindliche erste Schalteinheit S1 festgebremst.

In einem zweiten Schaltschritt des Gangwechsels ist die Bremseinheit B zu einer Öffnung vorgesehen. In dem zweiten Schaltschritt ist die Bremseinheit B dazu vorgesehen, von der geschlossenen Stellung B1 in die geöffnete Stellung B0 überzugehen. In dem zweiten Schaltschritt ist das drehbar gelagerte Kopplungselement 56 der Bremseinheit B über die in der ersten Schaltstellung S21 befindliche zweite Schalteinheit S2, über die Zahnradpaarung der zweiten Zahnradebene Z2, über die Vorgelegewelle 16, über die in der ersten Schaltstellung S31 befindliche dritte Schalteinheit S3 und über die in der zweiten Schaltstellung S12 befindliche erste Schalteinheit S1 gehäusefest gebremst.

Um eine Schaltung der ersten Schalteinheit S1 einzuleiten, muss, insbesondere durch die Momentenanpassungseinheit 20, ein Drehmoment an der Zwischenwelle 14 durch Abbremsen reduziert werden oder das Drehmoment an der Vorgelegewelle 16 durch Antreiben erhöht werden, bis das als Klauenschaltelement ausgebildete Schaltelement 62 der ersten Schalteinheit S1 an dem dritten Getriebeelement P13 der ersten Schalteinheit S1 zum Getriebegehäuse 60 lastfrei wird.

In einem dritten Schaltschritt des Gangwechsels ist die erste Schalteinheit S1 dazu vorgesehen, von der zweiten Schaltstellung S12 der ersten Schalteinheit S1 in die neutrale Schaltstellung S1N der ersten Schalteinheit S1 überzugehen. Dadurch ist eine Bewegung des dritten Getriebeelements P13 des ersten Planetenradsatzes P1 freigegeben. Ferner ist dadurch eine Drehzahlanpassung des dritten Getriebeelements P13 des ersten Planetenradsatzes P1 möglich.

In einem vierten Schaltschritt des Gangwechsels, insbesondere bei gleicher Drehzahl des dritten Getriebeelements P13 des ersten Planetenradsatzes P1 mit der Zwischenwelle 14, ist die erste Schalteinheit S1 dazu vorgesehen, von der neutralen Schaltstellung S1N der ersten Schalteinheit S1 in die erste Schaltstellung S11 der ersten Schalteinheit S1 überzugehen. Damit ist vorteilhaft eine parallele Schaltung der Vorschaltgruppe und der Nachschaltgruppe erfolgt.

Im Folgenden ist eine Rückschaltung von einem langsamsten Gang G5, G10 einer Ganggruppe, insbesondere einer Range high, in einen schnellsten Gang G4, G9 einer gegenüber der Ganggruppe niedrigeren Ganggruppe, insbesondere einer Range low, beschrieben. In einem niedrigsten Gang der Vorschaltgruppe erfolgt ein Kraftfluss über eine Zahnradebene des dritten Getriebeelements P23 des zweiten Planetenradsatzes P2. Durch Abbremsung der Zwischenwelle 14 und/oder Antrieb der Vorgelegewelle 16, beispielsweise durch eine als eine elektrische Maschine, wird das als Klauenschaltelement ausgebildete Schaltelement 62 der ersten Schalteinheit S1 lastfrei und kann damit in eine neutrale Schaltstellung S1N der ersten Schalteinheit S1 gestellt werden. Anschließend erfolgt eine Drehzahlanpassung durch Drehmomentenanpassung. Wenn eine Drehzahl an der Nachschaltgruppe und eine Drehzahl des zweiten Planetenradsatzes P2 der Vorschaltgruppe zum Stillstand gekommen sind, erfolgt die Verblockung des dritten Getriebeelements P13 des ersten Planetenradsatzes P1 mit dem Getriebegehäuse 60. Ein Momenteneingriff wird wieder aufgehoben und die Schaltung ist abgeschlossen.

### Bezugszeichenliste

- 10: Gruppengetriebevorrichtung
- 12: Eingangswelle
- 14: Zwischenwelle
- 16: Vorgelegewelle
- 18: Getriebeabtriebswelle
- 19: Abtriebswelle
- 20: Momentenanpassungseinheit
- 22: Schaltzahnrad
- 24: Losrad
- 26: Losrad
- 28: Festrad
- 30: Momentenstromrichtung
- 32: Losrad
- 34: Festrad
- 36: Losrad
- 38: Kraftfahrzeug
- 40: Antriebseinheit
- 42: Mehrstufengetriebe
- 44: Losrad
- 46: Losrad
- 48: Losrad
- 50: Losrad
- 52: Festrad
- 54: Losrad
- 56: Kopplungselement
- 58: Kopplungselement
- 60: Getriebegehäuse
- 62: Schaltelement
- 64: Kopplungselement
- 66: Kopplungselement
- 68: Kopplungselement
- 70: Schaltelement
- 72: Kopplungselement
- 74: Kopplungselement
- 76: Kopplungselement
- 78: Schaltzahnrad
- 82: Schaltelement
- 84: Kopplungselement
- 86: Kopplungselement
- 88: Kopplungselement
- 90: Schaltelement
- 92: Kopplungselement
- 94: Kopplungselement
- 96: Kopplungselement
- 98: Schaltelement
- 100: Kopplungselement
- 102: Kopplungselement
- 104: Kopplungselement

- G1: Getriebegang
- G2: Getriebegang
- G3: Getriebegang
- G4: Getriebegang
- G5: Getriebegang
- G6: Getriebegang
- G7: Getriebegang
- G8: Getriebegang
- G9: Getriebegang
- G10: Getriebegang
- G11: Getriebegang
- G12: Getriebegang
- G13: Getriebegang
- G14: Getriebegang
- P1: Planetenradsatz
- P11: Getriebeelement
- P12: Getriebeelement
- P13: Getriebeelement
- P14: Planetenrad
- P2: Planetenradsatz
- P21: Getriebeelement
- P22: Getriebeelement
- P23: Getriebeelement
- P24: Planetenrad
- P3: Planetenradsatz
- P31: Getriebeelement
- P32: Getriebeelement
- P33: Getriebeelement
- P34: Planetenrad
- B: Bremseinheit
- B0: Stellung
- B1: Stellung
- K1: Kupplung
- S1: Schalteinheit
- S11: Schaltstellung
- S12: Schaltstellung
- S1N: Schaltstellung
- S2: Schalteinheit
- S21: Schaltstellung
- S22: Schaltstellung
- S2N: Schaltstellung
- S3: Schalteinheit
- S31: Schaltstellung
- S32: Schaltstellung
- S3N: Schaltstellung
- S4: Schalteinheit
- S41: Schaltstellung
- S42: Schaltstellung
- S4N: Schaltstellung
- S5: Schalteinheit
- S51: Schaltstellung
- S52: Schaltstellung
- S5N: Schaltstellung
- S6: Schalteinheit
- S61: Schaltstellung
- S62: Schaltstellung
- S6N: Schaltstellung
- U1: erste Übersetzungsstufe
- U2: zweite Übersetzungsstufe
- Z1: Zahnradebene
- Z2: Zahnradebene
- Z3: Zahnradebene
- Z4: Zahnradebene
- Z5: Zahnradebene
- Z6: Zahnradebene
- Z7: Zahnradebene
- Z8: Zahnradebene
- Z9: Zahnradebene
- Z10: Zahnradebene

## Patentansprüche

1. Gruppengetriebevorrichtung mit einer Eingangswelle (12), mit einer Zwischenwelle (14), mit einer Vorgelegewelle (16), mit einer Getriebeabtriebswelle (18),
mit einem ersten Planetenradsatz (P1), welcher ein erstes Getriebeelement (P11), ein zweites Getriebeelement (P12), ein drittes Getriebeelement (P13) und eine Abtriebswelle (19) zum Ausleiten eines Drehmoments aus dem ersten Planetenradsatz (P1) aufweist,
wobei das erste Getriebeelement (P11) des ersten Planetenradsatzes (P1) mit der Zwischenwelle (14) drehfest gekoppelt ist,
wobei das zweite Getriebeelement (P12) des ersten Planetenradsatzes (P1) drehfest mit der Abtriebswelle (19) des ersten Planetenradsatzes (P1) gekoppelt ist, wobei die Abtriebswelle (19) mit der Getriebeabtriebswelle (18) entweder unmittelbar drehfest oder über eine dem ersten Planetenradsatz (P1) nachgeschaltete Übersetzungsstufe (P3) gekoppelt ist,
und wobei eine erste Schalteinheit (S1) dazu ausgebildet ist, in zumindest einer Schaltstellung (S12) das dritte Getriebeelement (P13) des ersten Planetenradsatzes (P1) gehäusefest anzuordnen,
wobei die Gruppengetriebevorrichtung einen zweiten Planetenradsatz (P2) aufweist, welcher ein erstes Getriebeelement (P21), ein zweites Getriebeelement (P22) und ein drittes Getriebeelement (P23) aufweist,
wobei das dritte Getriebeelement (P23) des zweiten Planetenradsatzes (P2) mit der Zwischenwelle (14) drehfest gekoppelt oder koppelbar ist und das zweite Getriebeelement (P22) des zweiten Planetenradsatzes (P2) drehfest mit der Eingangswelle (12) gekoppelt ist,
**dadurch gekennzeichnet, dass**
das erste Getriebeelement (P21) des zweiten Planetenradsatzes (P2) derart mit der Vorgelegewelle (16) gekoppelt oder koppelbar ist, dass an dem ersten Getriebeelement (P21) des zweiten Planetenradsatzes ein Drehmoment aus dem zweiten Planetenradsatz (P2) zu der Vorgelegewelle (16) ausgeleitet werden kann, und dass die Vorgelegewelle (16) derart mit dem dritten Getriebeelement (P13) des ersten Planetenradsatzes (P1) koppelbar ist, dass ausgehend von der Vorgelegewelle (16) ein Drehmoment an dem dritten Getriebeelement (P13) des ersten Planetenradsatzes (P1) in den ersten Planetenradsatz (P1) eingeleitet werden kann.

2. Gruppengetriebevorrichtung nach Anspruch 1,
**gekennzeichnet durch**
eine Bremseinheit (B), welche dazu vorgesehen ist, das erste Getriebeelement (P21) des zweiten Planetenradsatzes (P2) gehäusefest anzuordnen.

3. Gruppengetriebevorrichtung nach einem der vorhergehenden Ansprüche,
**gekennzeichnet durch**
eine Momentenanpassungseinheit (20), welche mit dem ersten Getriebeelement (P21) des zweiten Planetenradsatzes derart gekoppelt oder koppelbar ist, dass ein Drehmoment ausgehend von der Momentenanpassungseinheit an dem ersten Getriebeelement des zweiten Planetenradsatzes in den zweiten Planetenradsatz eingeleitet werden kann.

4. Gruppengetriebevorrichtung nach einem der vorhergehenden Ansprüche,
**gekennzeichnet durch**
eine zweite Schalteinheit (S2), welche dazu vorgesehen ist, in zumindest einer Schaltstellung (S21) das erste Getriebeelement (P21) des zweiten Planetenradsatzes (P2) mit der Vorgelegewelle (16) zu koppeln.

5. Gruppengetriebevorrichtung nach Anspruch 4,
**dadurch gekennzeichnet, dass**
das erste Getriebeelement (P21) des zweiten Planetenradsatzes (P2) mittels der zweiten Schalteinheit (S2) mit einem Losrad (26) drehfest koppelbar ist, welches mit einem Festrad (28) der Vorgelegewelle (16) permanent in Eingriff steht.

6. Gruppengetriebevorrichtung nach Anspruch 4,
**dadurch gekennzeichnet, dass**
die zweite Schalteinheit (S2) axial und in einer Momentenstromrichtung (30) betrachtet vor dem zweiten Planetenradsatz (P2) angeordnet ist.

7. Gruppengetriebevorrichtung nach Anspruch 6,
**dadurch gekennzeichnet, dass**
die Bremseinheit (B) axial und in Momentenstromrichtung (30) betrachtet axial vor der zweiten Schalteinheit (S2) angeordnet ist.

8. Gruppengetriebevorrichtung nach Anspruch 4,
**dadurch gekennzeichnet, dass**
die zweite Schalteinheit (S2) dazu ausgebildet ist, in einer weiteren Schaltstellung (S22) den zweiten Planetenradsatz (P2) zu verblocken.

9. Gruppengetriebevorrichtung nach einem der vorhergehenden Ansprüche,
**gekennzeichnet durch**
eine dritte Schalteinheit (S3), welche dazu vorgesehen ist, die Vorgelegewelle (16) mit dem dritten Getriebeelement (P13) des ersten Planetenradsatzes (P1) zu koppeln.

10. Gruppengetriebevorrichtung nach einem der vorhergehenden Ansprüche,
**dadurch gekennzeichnet, dass**
die erste Schalteinheit (S1) dazu vorgesehen ist, in zumindest einer weiteren Schaltstellung (S11) den ersten Planetenradsatz (P1) zu verblocken.

11. Gruppengetriebevorrichtung nach einem der vorhergehenden Ansprüche,
**gekennzeichnet durch**
eine vierte Schalteinheit (S4), welche dazu vorgesehen ist, in zumindest einer Schaltstellung (S41) die Zwischenwelle (14) mit der Vorgelegewelle (16) über eine Zahnradebene (Z4) zu koppeln.

12. Gruppengetriebevorrichtung nach Anspruch 11,
**dadurch gekennzeichnet, dass**
die vierte Schalteinheit (S4) eine neutrale Schaltstellung (S4N) und eine zweite Schaltstellung (S42) aufweist und dazu vorgesehen ist, in der zweiten Schaltstellung (S42) die Zwischenwelle (14) mit der Vorgelegewelle (16) über eine weitere Zahnradebene (Z5) zu koppeln.

13. Gruppengetriebevorrichtung nach einem der vorhergehenden Ansprüche,
**dadurch gekennzeichnet, dass**
das erste Getriebeelement (P11) des ersten Planetenradsatzes (P1) als ein Sonnenrad ausgebildet ist, das zweite Getriebeelement (P12) des ersten Planetenradsatzes (P1) als ein Planetenradträger ausgebildet ist und das dritte Getriebeelement (P13) des ersten Planetenradsatzes (P1) als ein Hohlrad ausgebildet ist.

14. Gruppengetriebevorrichtung nach einem der vorhergehenden Ansprüche,
**dadurch gekennzeichnet, dass**
das erste Getriebeelement (P21) des zweiten Planetenradsatzes (P2) als ein Sonnenrad ausgebildet ist und das dritte Getriebeelement (P23) des zweiten Planetenradsatzes (P2) als ein Hohlrad ausgebildet ist.

15. Verfahren zum Schalten einer Gruppengetriebevorrichtung nach Anspruch 10,
**dadurch gekennzeichnet, dass**
ausgehend von einem Getriebegang (G4), in welchem mittels der ersten Schalteinheit (S1) das dritte Getriebeelement (P13) des ersten Planetenradsatzes (P1) gehäusefest angeordnet ist, eine Hochschaltung mit zumindest den folgenden Schritten in der angegebenen Reihenfolge erfolgt:
- Kopplung des ersten Getriebeelementes (P21) des zweiten Planetenradsatzes (P2) mit dem dritten Getriebeelement (P13) des ersten Planetenradsatzes (P1) über die Vorgelegewelle (16),
- Überführung der ersten Schalteinheit (S1) in eine neutrale Schaltstellung (S1N),
- Überführung der ersten Schalteinheit (S1) in die weitere Schaltstellung (S11) zur Verblockung des ersten Planetenradsatzes (P1).

16. Antriebsstrang für ein Kraftfahrzeug mit einer als Verbrennungsmotor ausgebildeten Antriebseinheit (40) und einer Gruppengetriebevorrichtung nach Anspruch 4,
**dadurch gekennzeichnet, dass**
eine Kurbelwelle des Verbrennungsmotors permanent drehfest mit der Eingangswelle (12) gekoppelt ist.

## Claims

1. Range-change gearbox device with an input shaft (12), with an intermediate shaft (14), with a layshaft (16), with a gearbox output shaft (18), with a first planetary gear set (P1) having a first transmission element (P11), a second transmission element (P12), a third transmission element (P13) and a drive shaft (19) for taking a torque off the first planetary gear set (P1),
wherein the first transmission element (P11) of the first planetary gear set (P1) is non-rotatably coupled to the intermediate shaft (14),
wherein the second transmission element (P12) of the first planetary gear set (P1) is non-rotatably coupled to the output shaft (19) of the first planetary gear set (P1),
wherein the output shaft (19) of the first planetary gear set (P1) is coupled to the gearbox output shaft (18) either directly non-rotatably or by way of a gear ratio stage (P3) downstream of the first planetary gear set (P1),
and wherein a first shifting unit (S1) is designed to place the third transmission element (P13) of the first planetary gear set (P1) in a fixed position relative to the housing in at least one shifting position (S12),
wherein the range-change gearbox device has a second planetary gear set (P2) having a first transmission element (P21), a second transmission element (P22), a third transmission element (P33),
wherein the third transmission element (P23) of the second planetary gear set (P2) is or can be non-rotatably coupled to the intermediate shaft (14) and the second transmission element (P22) of the second planetary gear set (P2) is non-rotatably coupled to the input shaft (12),
**characterised in that**
the first transmission element (P21) of the second transmission element (P22) is or can be coupled to the layshaft (16) in such a way that a torque can be taken off at the first transmission element (P21) of the second planetary gear set from the second planetary gear set (P2) to the layshaft (16), and **in that** the layshaft (16) can be coupled to the third transmission element (P13) of the first planetary gear set (P1) in such a way that, starting from the layshaft (16), a torque can be introduced at the third transmission element (P13) of the first planetary gear set (P1) into the first planetary gear set (P1).

2. Range-change gearbox device according to claim 1
**characterised by**
a braking unit (8) provided to place the first transmission element (P21) of the second planetary gear set (P2) in a fixed position relative to the housing.

3. Range-change gearbox device according to any of the preceding claims,
**characterised by**
a momentum adaptation unit (20), which is or can be coupled to the first transmission element (P21) of the second planetary gear set in such a way that a torque starting from the momentum adaptation unit at the first transmission element of the second planetary gear set can be introduced into the second planetary gear set.

4. Range-change gearbox device according to any of the preceding claims,
**characterised by**
a second shifting unit (S2), which is provided to couple the first transmission element (P21) of the second planetary gear set (P2) to the layshaft (16) in at least one shifting position (S21).

5. Range-change gearbox device according to claim 4,
**characterised in that**
the first transmission element (P21) of the second planetary gear set (P2) can be non-rotatably coupled to an idler gear (26) by means of the second shifting unit (S2), which idler hear (26) is in permanent engagement with a fixed gear (28) of the layshaft (16).

6. Range-change gearbox device according to claim 4,
**characterised in that**
the second shifting unit (S2) is located upstream of the second planetary gear set (P2) axially and as viewed in a momentum flow direction (30).

7. Range-change gearbox device according to claim 6,
**characterised in that**
the braking unit (B) is located upstream of the second shifting unit (S2) axially and as viewed in a momentum flow direction (30).

8. Range-change gearbox device according to claim 4,
**characterised in that**
the second shifting unit (S2) is designed to block the second planetary gear set (P2) in a further shifting position (S22).

9. Range-change gearbox device according to any of the preceding claims,
**characterised by**
a third shifting unit (S3), which is provided to couple the layshaft (16) to the third transmission element (P13) of the first planetary gear set (P1).

10. Range-change gearbox device according to any of the preceding claims,
**characterised in that**
the first shifting unit (S1) is provided to block the first planetary gear set (P1) in at least one further shifting position (S11).

11. Range-change gearbox device according to any of the preceding claims,
**characterised by**
a fourth shifting unit (S4), which is provided to couple the intermediate shaft (14) to the layshaft (16) across a gear plane (Z4) in at least one further shifting position (S41).

12. Range-change gearbox device according to claim 11,
**characterised in that**
the fourth shifting unit (S4) has a neutral shifting position (S4N) and a second shifting position (S42) and is provided to couple the intermediate shaft (14) to the layshaft (16) across a further gear plane (Z5) in the second shifting position (S42).

13. Range-change gearbox device according to any of the preceding claims,
**characterised in that**
the first transmission element (P11) of the first planetary gear set (P1) is designed as a sun gear, the second transmission element (P12) of the first planetary gear set (P1) is designed as a planet carrier and the third transmission element (P13) of the first planetary gear set (P1) is designed as a ring gear.

14. Range-change gearbox device according to any of the preceding claims,
**characterised in that**
the first transmission element (P21) of the second planetary gear set (P2) is designed as a sun gear and the third transmission element (P23) of the second planetary gear set (P2) is designed as a ring gear.

15. Method for shifting a range-change gearbox device according to claim 10,
**characterised in that**
starting from a gear (G4), in which the third transmission element (P13) of the first planetary gear set (P1) is placed in a fixed position relative to the housing by means of the first shifting unit (S1), an upward gear change is carried out with at least the following steps in the stated sequence:
- the coupling of the first transmission element (P21) of the second planetary gear set (P2) to the third transmission element (P13) of the first planetary gear set (P1) by way of the layshaft (16),
- the transfer of the first shifting unit (S1) into a neutral shifting position (S1N),
- the transfer of the first shifting unit (S1) into the further shifting position (S11) to block the first planetary gear set (P1).

16. Drive train for a motor vehicle with a drive unit (40) designed as an internal combustion engine and a range-change gearbox device according to claim 4,
**characterised in that**
a crankshaft of the internal combustion engine is permanently joined non-rotatably to the input shaft (12).

## Revendications

1. Boîte de vitesses à plusieurs gammes comprenant un arbre d'entrée (12), un arbre intermédiaire (14) un arbre de renvoi (16), un arbre de sortie (18), un premier ensemble de train planétaire (P1), qui présente un premier élément de transmission (P11), un deuxième élément de transmission (P12), un troisième élément de transmission (P13) et un arbre secondaire (19) pour faire sortir un couple du premier jeu de train planétaire (P1),
le premier élément de transmission (P11) du premier ensemble de train planétaire (P1) étant accouplé solidaire en rotation avec l'arbre intermédiaire (14),
le deuxième élément de transmission (P12) du premier ensemble de train planétaire (P1) étant accouplé solidaire en rotation avec l'arbre secondaire (19),
l'arbre secondaire (19) étant accouplé avec l'arbre de sortie soit indirectement solidaire en rotation ou soit par un premier étage de multiplication (P3) monté en aval de l'arbre de sortie (18),
et une première unité de commutation (S1) étant conçu pour, dans au moins une position de commutation (S12), disposer à demeure le troisième élément de transmission (P13) du premier ensemble de train planétaire (P1) au niveau du boîtier,
la boîte de vitesse à plusieurs gammes comportant un second ensemble de train planétaire (P2) qui comporte un premier élément de transmission (P21), un deuxième élément de transmission (P22) et un troisième élément de transmission (P23),
le troisième élément de transmission (P23) du second ensemble de train planétaire (P2) peut être accouplé ou peut être accouplé solidaire en rotation avec l'arbre intermédiaire (14) et le deuxième élément de transmission (P22) du second ensemble de train planétaire (P2) est accouplé solidaire en rotation avec l'arbre d'entrée (12),
**caractérisée en ce que**
le premier élément de transmission (P21) du second ensemble de train planétaire (P2) est accouplé ou peut être accouplé à l'arbre de renvoi (16) de manière à ce que sur le premier élément de transmission (P21) du second ensemble de train planétaire un couple puisse être dévié à partir du second ensemble de train planétaire (P2) vers l'arbre de renvoi (16),
et **en ce que** l'arbre de renvoi (16) puisse être accouplé au troisième élément de transmission (P13) du premier ensemble de train planétaire (P1) de manière à ce qu'à partir de l'arbre de renvoi (16) un couple sur le troisième élément de transmission (P13) du premier ensemble de train planétaire (P1) puisse être introduit dans le premier puisse être ensemble de train planétaire (P1).

2. Boîte de vitesses à plusieurs gammes selon la revendication 1, **caractérisée en ce qu'**une unité de frein (B) sert à disposer à demeure le premier élément de transmission (P21) du second ensemble de train planétaire (P2) au niveau du boîtier.

3. Boîte de vitesses à plusieurs gammes selon l'une quelconque des revendications précédentes, **caractérisée en ce qu'**une unité d'adaptation de couple (20), qui est accouplée ou peut être accouplée au premier élément de transmission (P21) du second ensemble de train planétaire, de manière à ce qu'un couple à partir de l'unité d'adaptation de couple sur le premier élément de transmission du second ensemble de train planétaire puisse être introduit dans le second ensemble de train planétaire.

4. Boîte de vitesses à plusieurs gammes selon l'une quelconque des revendications précédentes, **caractérisée par**
une deuxième unité de commutation (S2) qui sert à accoupler dans au moins une position de commutation (S21) le premier élément de transmission (P21) du second ensemble de train planétaire (P2) avec l'arbre de renvoi (16).

5. Boîte de vitesses à plusieurs gammes selon la revendication 4, **caractérisée en ce que**
le premier élément de transmission (P21) du second ensemble de train planétaire (P2) peut être accouplé solidaire en rotation au moyen de la deuxième unité de commutation (S2) avec un pignon fou (26) qui s'engrène en continu avec un pignon fixe (28) de l'arbre de renvoi (16).

6. Boîte de vitesses à plusieurs gammes selon la revendication 4, **caractérisée en ce que**
la deuxième unité de commutation (S2) est disposée axialement et, lorsqu'elle est observée dans le sens du flux de couple (30), avant le second ensemble de train planétaire (P2).

7. Boîte de vitesses à plusieurs gammes selon la revendication 6, **caractérisée en ce que** l'unité de frein (B) est disposée axialement et, lorsqu'elle est disposée dans la direction du flux de couple (30), avant la deuxième unité de commutation (S2).

8. Boîte de vitesses à plusieurs gammes selon la revendication 4, **caractérisée en ce que** la deuxième unité de commutation (S2) est conçue pour bloquer le second ensemble de train planétaire (P2) dans une seconde position de commutation (S22).

9. Boîte de vitesses à plusieurs gammes selon l'une quelconque des revendications précédentes, **caractérisée par** une troisième unité de commutation (S3) qui sert à coupler l'arbre de renvoi (16) avec le troisième élément de transmission (P13) du premier ensemble de train planétaire (P1).

10. Boîte de vitesses à plusieurs gammes selon l'une quelconque des revendications précédentes, **caractérisée en ce que** la première unité de commutation (S1) sert à bloquer au moins dans un seconde autre position de commutation (S11) le premier ensemble de train planétaire (P1).

11. Boîte de vitesses à plusieurs gammes selon l'une quelconque des revendications précédentes, **caractérisée par** une quatrième unité de commutation (S4) qui sert à coupler dans au moins une position de commutation (S41) l'arbre intermédiaire (14) avec l'arbre de renvoi (16) par un plan de roue dentée (Z4).

12. Boîte de vitesses à plusieurs gammes selon la revendication 11, **caractérisée en ce que**
la quatrième unité de commutation (S4) comprend une position de commutation neutre (S4N) et une seconde position (S42) et sert à coupler dans la seconde position de commutation (S42) l'arbre intermédiaire (14) avec l'arbre de renvoi (16) au moyen d'un autre plan de roue dentée (Z5).

13. Boîte de vitesses à plusieurs gammes selon l'une quelconque des revendications précédentes, **caractérisée en ce que**
le premier élément de transmission (P11) du premier ensemble planétaire (P1) est conçu sous la forme d'un pignon planétaire, le deuxième élément de transmission (P12) du premier ensemble planétaire (P1) est conçu sous la forme d'un support de pignon planétaire et le troisième élément de transmission (P13) du premier ensemble planétaire (P1) est conçu sous la forme d'une couronne.

14. Boîte de vitesses à plusieurs gammes selon l'une quelconque des revendications précédentes, **caractérisée en ce que**
le premier élément de transmission (P21) du second ensemble planétaire (P2) est conçu sous la forme d'un pignon planétaire et le troisième élément de transmission (P23) du second ensemble planétaire (P2) est conçu sous la forme d'une couronne.

15. Procédé de commutation d'une boîte de vitesse à plusieurs gammes selon la revendication 10, **caractérisé en ce que**
à partir d'un rapport de vitesse (G4), dans lequel au moyen de la première unité de commutation (S1) le troisième élément de transmission (P13) du premier ensemble de train planétaire (P1) est disposé à demeure au niveau du boîtier, une commutation supérieure s'effectue avec au moins les étapes suivantes dans l'ordre indiqué :
- accouplement du premier élément de transmission (P21) du second ensemble de train planétaire (P2) avec le troisième élément de transmission (P13) du premier ensemble de train planétaire (P1) par l'arbre de renvoi (16),
- amener la première unité de commutation (S1) dans une position de commutation neutre (S1N),
- amener la première unité de commutation (S1) dans la seconde position de commutation (S11) pour bloquer le premier ensemble de train planétaire (P1).

16. Groupe motopropulseur pour un véhicule à moteur comprenant une unité d'entraînement (40) conçu sous la forme d'un moteur à combustion interne et une boîte de vitesses à plusieurs gammes selon la revendication 4, **caractérisé en ce qu'**
un vilebrequin du moteur à combustion interne est accouplé en continu solidaire en rotation avec l'arbre d'entrée (12).
